(19) Europäisches Patentamt
European Patent Office
Office européen des brevets

(11) EP 3 288 910 B1

# (12) EUROPEAN PATENT SPECIFICATION

(45) Date of publication and mention of the grant of the patent:
**27.02.2019 Bulletin 2019/09**

(21) Application number: **16722546.5**

(22) Date of filing: **25.04.2016**

(51) Int Cl.:
***C04B 24/16*** *(2006.01)* ***C04B 28/02*** *(2006.01)*
***C04B 40/00*** *(2006.01)* *C04B 103/14* *(2006.01)*

(86) International application number:
**PCT/EP2016/059180**

(87) International publication number:
**WO 2016/173985 (03.11.2016 Gazette 2016/44)**

## (54) ACCELERATOR COMPOSITION

BESCHLEUNIGERZUSAMMENSETZUNG

COMPOSITION D'ACCELERATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.04.2015 EP 15165841**

(43) Date of publication of application:
**07.03.2018 Bulletin 2018/10**

(73) Proprietor: **Construction Research & Technology GmbH**
**83308 Trostberg (DE)**

(72) Inventors:
- **HILLESHEIM, Nina Susanne**
  **83308 Trostberg (DE)**
- **SCHOLZ, Christian**
  **84518 Wald a. d. Alz (DE)**
- **LOGES, Niklas**
  **83132 Pittenhart (DE)**
- **DIETZSCH, Michael**
  **83026 Rosenheim (DE)**
- **HESSE, Christoph**
  **85560 Ebersberg (DE)**

(74) Representative: **BASF IP Association**
**BASF SE**
**G-FLP-C006**
**67056 Ludwigshafen (DE)**

(56) References cited:
**WO-A1-2010/026155**
**WO-A1-2014/026938**
**WO-A1-2014/114784**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 288 910 B1

## Description

The present invention relates to compositions, preferably accelerator compositions, comprising inorganic compounds selected from calcium silicate hydrate (C-S-H), ettringite or AFm phases and a copolymer CP comprising i) at least one polyether macromonomer of the general formula (I) in copolymerized form and ii) at least one anionic monomer in copolymerized form, the weight ratio of copolymer CP to calcium in the composition being from 1/20 to 20/1. The invention also relates to a method for producing the compositions of the invention, characterized in that an aqueous solution of a calcium salt is reacted in the presence of a copolymer CP in case a) with a silicate salt, in case b) with an aluminium salt and optionally sulphate salt, or in case c) with a silicate salt, aluminium salt and optionally sulphate salt, followed optionally by a drying step. Further subjects are the use of the compositions for accelerating hardening of chemical construction mixtures, and also construction material mixtures comprising the compositions and an inorganic binder.

It is known that aqueous slurries of organic or inorganic substances in powder form, such as clays, finely ground silicate, chalk, carbon black, finely ground rock and hydraulic binders are often admixed with admixtures in the form of dispersants for the purpose of improving their processing properties, i.e. kneadability, spreadability, sprayability, pumpability or fluidity. Such admixtures are capable of disrupting agglomerated solids, dispersing the particles formed, and in this way improving the fluidity. This effect is also exploited in particular, in a targeted way, in the production of construction material mixtures which comprise hydraulic binders, such as cement, lime, calcium sulphate-based binders, such as calcium sulphate hemihydrate (bassanite) or anhydrous calcium sulphate (anhydrite), or latent hydraulic binders such as flyash, blast furnace slag or pozzolans.

To convert these construction material mixtures, based on the stated binders, into a ready-to-use processable form, there is generally a need for a substantially greater amount of mixing water than would be necessary for the subsequent hydration and hardening process. The cavity fraction in the concrete element, formed by the excess water that later evaporates, leads to significantly impaired mechanical strengths and resistance properties.

To reduce this excess water fraction for a given processing consistency, and/or to improve the processing properties for a given water/binder ratio, admixtures are used that are generally identified as water reducers or superplasticizers. Employed more particularly as such admixtures in practice are copolymers prepared by radical copolymerization of acid monomers with polyether macromonomers.

US 6,777,517 B1 discloses copolymers based on unsaturated monocarboxylic or dicarboxylic acid derivatives and oxyalkylene glycol alkenyl ethers, which are used as dispersant (water reducers) for cementitious compositions in order to ensure good processing properties and effective development of strength.

The International patent application WO 2015/063194 A1 discloses copolymers which comprise alkoxylates of S-vinylthioalkanols in copolymerized form. The copolymers include comonomers which comprise carboxylic, sulphonic, phosphoric or phosphonic acid groups. The uses of the copolymers include their use as dispersants for cementitious binder compositions, for which up to 0.3 wt% of the copolymer has been used, based on the binder cement. Accelerators for the setting of cementitious binder compositions are not disclosed in the specification.

Furthermore, admixtures for construction material mixtures comprising hydraulic binders further typically comprise hardening accelerators, which shorten the solidification time of the hydraulic binder. According to WO 02/070425, calcium silicate hydrate, especially in dispersed form (finely or particularly finely dispersed), can be used as one such hardening accelerator. However, commercially available calcium silicate hydrate, or corresponding calcium silicate hydrate dispersions, can be regarded only as relatively ineffective hardening accelerators.

WO 2010/026155 A1 describes aqueous suspensions which comprise calcium silicate hydrate and a comb polymer as superplasticizers for cementitious compositions. The suspensions accelerate the development of early strength in cementitious compositions.

The specification WO 2014/114784 A1 discloses additives for hydraulically setting materials that comprise at least a) a polymeric dispersant comprising structural units having anionic or anionogenic groups and structural units having polyether side chains, b) at least one sulphonic acid compound and c) calcium silicate hydrate particles. The problem addressed was in particular that of obtaining dry products in powder form without substantial losses of accelerated curing in the drying of the liquid, water-containing products, while avoiding deleterious anions such as chloride or nitrate, for example.

The problem addressed by the present invention is that of providing a composition which acts in particular as a hardening accelerator for hydraulically setting binders and which enhances the development of early strength by the hydraulically setting binders, especially by cement. Development of early strength refers in particular to the compressive strength 6 hours after preparation by mixing with water, for the hydraulically setting binder or for a hydraulically setting binder mixture.

The solution to this problem are compositions, preferably hardening accelerator compositions, comprising inorganic compounds selected from calcium silicate hydrate (C-S-H), ettringite or AFm phases, where it is possible for one or more of the stated inorganic compounds to be present and the AFm phases being defined by the general formula

$[Ca_2(Al,Fe)(OH)_6]\cdot X\cdot yH_2O$, where X is one formula unit of a singly charged anion or half a formula unit of a doubly charged anion; X is preferably hydroxide, ½ sulphate or ½ carbonate, it also being possible for two or more species of the anions to be present jointly, and the parameter y is $\leq 6$ and a copolymer CP comprising i) at least one polyether macromonomer of the general formula (I) in copolymerized form

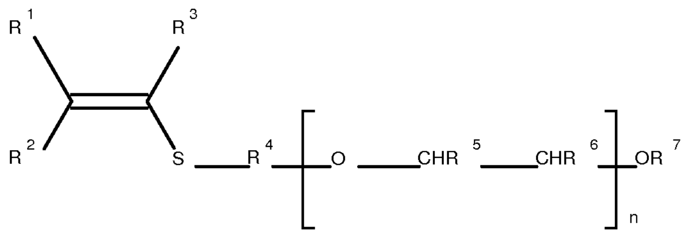

(I)

where

$R^1$, $R^2$ and $R^3$ independently of one another are identical or different and are H or $CH_3$,
$R^4$ is linear or branched $C_1$-$C_{30}$ alkylene,
$R^5$ and $R^6$ independently of one another are identical or different and are H, $C_1$-$C_{20}$ alkyl, $C_3$-$C_{15}$ cycloalkyl, aryl, $-CH_2$-O-$C_1$-$C_{20}$ alkyl, $CH_2$-O-$C_2$-$C_{20}$ alkenyl, and $R^5$ and $R^6$ may also together form a $C_3$-$C_6$ alkylene,
$R^7$ independently at each occurrence is identical or different and is H, $C_1$-$C_4$ alkyl or

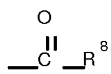

$R^8$ is $C_1$-$C_{22}$ alkyl or $C_2$-$C_{22}$ alkenyl, and
n independently at each occurrence is identical or different and is an integer from 2 to 200,

and

ii) at least one anionic monomer in copolymerized form,

the weight ratio of copolymer CP to calcium in the composition being from 1/20 to 20/1, preferably 1/10 to 10/1, more preferably 1/5 to 5/1 and most preferably 1/1 to 5/1.

The solution to this problem is also a method for producing the compositions of the invention, characterized in that an aqueous solution of a calcium salt is reacted in the presence of a copolymer CP in case a) with a silicate salt, in case b) with an aluminium salt and optionally sulphate salt, or in case c) with a silicate salt, aluminium salt and optionally sulphate salt, followed optionally by a drying step.

Likewise a solution to this problem is the use of the compositions for accelerating hardening of chemical construction mixtures comprising cement, slag, preferably granulated blast furnace slag, flyash, finely ground silica, metakaolin, natural pozzolans, calcined oil shale, calcium sulphoaluminate cements and/or calcium aluminate cements, preferably in chemical construction mixtures comprising predominantly cement as hydraulic binder. The problem is also solved by construction material mixtures comprising the compositions and also cement, slag, preferably granulated blast furnace slag, flyash, finely ground silica, metakaolin, natural pozzolans, calcined oil shale, calcium sulphoaluminate cements and/or calcium aluminate cements.

The curing accelerator comprises calcium-comprising inorganic compounds and an organic component in the form of the copolymer CP, with the weight ratio of copolymer CP to calcium in the composition being from 1/20 to 20/1, preferably 1/10 to 10/1, more preferably 1/5 to 5/1 and most preferably 1/1 to 5/1. With these mass ratios of copolymer CP to calcium in the inorganic compounds, a particularly good accelerating effect is obtained. First of all, the calcium-comprising inorganic compounds will be described in detail more closely.

The inorganic compounds are selected from calcium silicate hydrate (C-S-H), ettringite ($Ca_6[Al(OH)_6]_2SO_4)_3\cdot 26\ H_2O$) or AFm phases, it being possible for one or more of the three aforesaid calcium-comprising inorganic compounds to be present. Especially preferred are calcium silicate hydrate (C-S-H) and/or ettringite.

Calcium silicate hydrate (C-S-H) as calcium-comprising inorganic compound is preferably in the form of finely divided calcium silicate hydrate, which can contain foreign ions such as magnesium and aluminium. The calcium silicate hydrate is prepared preferably in the presence of the copolymer CP (organic component) and thereby stabilized in finely divided form. The calcium silicate hydrate preferably has crystallite sizes of less than 30 nm, more preferably less than

15 nm, determinable via the Debye-Scherrer equation for evaluating the peak width of the 020 reflection of calcium silicate hydrate (e.g. in the case of 14 Å tobermorite, ICSD structure: 152489) in an x-ray diffractogram. C-S-H is present more particularly in an x-ray-amorphous structure, and so there are no diffraction reflections of the corresponding C-S-H phases in the x-ray diffractogram.

Obtained customarily is a suspension which comprises the calcium silicate hydrate in finely divided form and which effectively accelerates the process of hardening of hydraulic binders.

In the majority of cases, the inorganic component can be described preferably in terms of its composition by the following empirical formula:

$$a\ CaO,\ SiO_2,\ b\ Al_2O_3,\ c\ H_2O,\ d\ X,\ e\ W$$

X is an alkali metal
W is an alkaline earth metal other than calcium

| | | |
|---|---|---|
| $0.1 \leq a \leq 2$ | preferably | $0.66 \leq a \leq 1.8$ |
| $0 \leq b \leq 1$ | preferably | $0 \leq b \leq 0.1$ |
| $1 \leq c \leq 6$ | preferably | $1 \leq c \leq 4.0$ |
| $0 \leq d \leq 1$ | preferably | $0 \leq d \leq 0.4$ |
| $0 \leq e \leq 2$ | preferably | $0 \leq e \leq 0.1$ |

In one preferred embodiment, the aqueous solution, as well as silicate ions and calcium ions, comprises further dissolved ions, provided preferably in the form of dissolved aluminium salts and/or dissolved magnesium salts. Aluminium salts used may preferably be aluminium halide, aluminium nitrate, aluminium hydroxide and/or aluminium sulphate. Within the group of the aluminium halides, aluminium chloride is particularly preferred. As far as the magnesium salts are concerned, those preferred are magnesium nitrate, magnesium chloride and/or magnesium sulphate. The advantage of the aluminium salts and magnesium salts is that through the introduction of ions which are different from calcium and silicon, it is possible to generate defects in the calcium silicate hydrate. This results in an improved hardening accelerating effect. The molar ratio of aluminium and/or magnesium to calcium and silicon is preferably small. With particular preference the molar ratios are calculated such that in the empirical formula above, the preferred ranges for a, b and e are fulfilled ($0.66 \leq a \leq 1.8$; $0 \leq b \leq 0.1$; $0 \leq e \leq 0.1$). With more particular preference there is no aluminium in the calcium silicate hydrate.

Calcium silicate hydrate is formed generally under alkaline conditions from calcium salts and silicates. It is also formed, for example, in the hydration of Portland cements.

The water content is variable, as is the ratio of the calcium to silicon. The molar ratio of calcium to silicon in calcium silicate hydrates is typically in the range from 0.6 to 2, preferably 0.8 to 1.8, especially preferably 1.0 to 1.5.

The calcium silicate hydrate typically takes the form of foshagite, hillebrandite, xonotlite, nekoite, clinotobermorite, 9 Å tobermorite (riversiderite), 11 Å tobermorite, 14 Å tobermorite (plombierite), jennite, metajennite, calcium chondrodite, afwillite, $\alpha$-$C_2SH$, dellaite, jaffeite, rosenhahnite, killalaite and/or suolunite, it being possible for one or more of the aforesaid forms to be present.

Ettringite is known under the formula $Ca_6[Al(OH)_6]_2(SO_4)_3 \cdot 26\ H_2O$ and is formed under alkaline conditions from calcium salts, aluminium salts and sulphates. Ettringite is considered to be a AFt phase. AFt phases are defined in H.F.W. Taylor: Cement Chemistry (1997), 2nd edition, Thomas Telford Services Ltd., ISBN: 0 7277 2592 0; pages 157 to 170, particularly on pages 166 to 169 (section 6.2 to 6.2.3). Preferred accordingly under AFt phases are calcium-comprising compounds of the general formula $[Ca_3(Al,Fe)(OH)_6 12\ H_2O]_2 \cdot X_3 \cdot y\ H_2O$, where X represents a formula unit of a doubly charged anion, or two formula units of a singly charged anion. X is preferably sulphate. The designation (Al,Fe) means that the element aluminium in the AFt phases may have been wholly or partly replaced by iron, or else vice versa. In this patent application, aluminium is present preferably, and not iron. The parameter y is $\leq 2$. Ettringite is formed, for example, in the initial stage of the hydration of Portland cements.

Ettringite is a mineral from the mineral class of the hydrous sulphates with foreign anions. It crystallizes in the monoclinic crystal system with the chemical composition $Ca_6Al_2[(OH)_{12}|(SO_4)_3]\bullet 26\ H_2O$, and develops usually well-pronounced, prismatic or acicular, pseudohexagonal crystals. According to the notation more usual in construction chemistry, the oxidic empirical formula reads as follows: $3CaO \cdot Al_2O_3 \cdot 3CaSO_4 \cdot 32H_2O$.

The molar ratio of sulphate to aluminium in the compositions is preferably from 1.2 to 1.8, especially preferably from 1.3 to 1.7, most preferably from 1.4 to 1.6. In these cases, ettringite will be formed, resulting in good acceleration effects.

There are preferably AFt phases (e.g. ettringite) present having crystallite sized of less than 200 nm, more preferably less than 100 nm and especially preferably less than 50 nm, as determinable via the Debye-Scherrer equation

for evaluating the peak width of the 100 reflection of AFt (e.g. in the case of ettringite, ICSD structure: 155395) in an x-ray diffractogram. More particularly, AFt is present in an x-ray-amorphous structure, and so there are no diffraction reflections of the corresponding AFt phases in the x-ray diffractogram.

The pH of the compositions in aqueous solution is preferably greater than 9, more preferably greater than 10 and especially preferably greater than 11. The pH is measured preferably at a solids content of 5 wt%, at 20°C and under atmospheric pressure. At lower pH levels, ettringite, calcium silicate hydrate and AFm phases as well are unstable.

AFm phases are defined in H.F.W. Taylor: Cement Chemistry (1997), 2nd edition, Thomas Telford Services Ltd., ISBN: 0 7277 2592 0; pages 157 to 170, especially on pages 157 to 166 (section 6.1 to 6.1.6). AFm phases are preferably, accordingly, the calcium-comprising compounds of the general formula $[Ca_2(Al,Fe)(OH)_6] \cdot X \cdot yH_2O$, where X is one formula unit of a singly charged anion or half a formula unit of a doubly charged anion. X is preferably hydroxide, ½ sulphate or ½ carbonate, it also being possible for two or more species of the anions to be present jointly, and the parameter y is $\leq 6$. The designation (Al,Fe) means that the element aluminium in the AFm phases may have been wholly or partly replaced by iron, or else vice versa. In this patent application, aluminium is preferably present, and not iron.

Examples of AFm phases are kuzelite, a mineral having the chemical composition $Ca_4Al_2(OH)_{12}(SO_4) \cdot 6H_2O$, and calcium aluminate hydrate ($C_4AH_{19}$, $C_4AH_{13}$, $C_4AH_{11}$, $C_4AH_7$). AFm phases are formed particularly in the absence of sulphate or in the presence of small amounts of sulphate. They come about more particularly when the molar ratio of sulphate to aluminium is smaller than 3/2. At higher sulphate levels, ettringite is formed in preference.

AFm phases (e.g. kuzelite) are present preferably with crystallite sizes of less than 200 nm, more preferably less than 100 nm and especially preferably less than 50 nm, as determinable via the Debye-Scherrer equation for evaluating the peak width of the 003 reflection of AFm (e.g. in the case of kuzelite, ICSD structure: 100138) in an x-ray diffractogram. In particular, AFm is present in an x-ray-amorphous structure, and so there are no diffraction reflections of the corresponding AFm phases in the x-ray diffractogram.

As mentioned above in the case of calcium silicate hydrate (C-S-H), ettringite and the AFm phases are also prepared preferably in the presence of the copolymer CP (organic component) and as a consequence are present in a stabilized finely divided form. As a result, the hardening accelerator properties of these inorganic compounds are particularly good.

In preferred compositions, the molar ratio of calcium to silicon in the composition is from 0.1 to 40, more preferably 0.5 to 20 and especially preferably from 1 to 12. In this case there is at least calcium silicate hydrate in the compositions.

Preferred compositions are those for which the molar ratio of aluminium to calcium in the composition is from 0 to 1, more preferably 0 to 0.5 and especially preferably from 0 to 0.2, and the molar ratio of sulphate to calcium in the composition is from 0 to 1, more preferably 0 to 0.5 and especially preferably from 0 to 0.25.

Preferred compositions are those for which the molar ratio of aluminium to calcium in the composition is from 0 to 1, more preferably 0 to 0.5 and especially preferably from 0 to 0.2, and the molar ratio of sulphate to calcium in the composition is from 0 to 0.25, more preferably 0 to 0.2 and especially preferably from 0 to 0.15.

Preferred compositions are those where there are no silicon and calcium silicate hydrate (C-S-H) present and the molar ratio of aluminium to calcium in the composition is from 0.01 to 2. Because of the absence of silicon, no calcium silicate hydrate is present. There are AFm phases (if there is little sulphate in the composition) and/or ettringite (if there is a lot of sulphate in the composition).

Preferred compositions are those for which the composition is a water-containing suspension and comprises 0.05 to 5 mol of calcium, preferably 0.1 to 3.6 mol of calcium, more preferably 0.25 to 2.0 mol of calcium per kg of the suspension. The water content of the aqueous suspensions, in the case of a calcium content of 0.05 to 5 mol per kg and also in the case of a suspension calcium content of 0.1 to 3.6 mol per kg of the suspension, is preferably 50 to 99 wt%, more preferably 60 to 99 wt% and especially preferably 70 to 99 wt%, most preferably 80 to 99 wt%.

In preferred compositions, the composition is a powder and comprises 0.25 to 8 mol of calcium, more preferably 0.5 to 5 mol of calcium, more preferably 0.7 to 3.0 mol of calcium per kg of the powder. The water content is preferably less than 10 wt%, more preferably less than 5 wt% and especially preferably less than 2 wt%.

In order to determine the water content of the powder samples and also of the suspensions, the procedure adopted is as follows: a sample (about 3 g) is kept in an oven at 60°C for 24 hours. The water content (wt%) is found from the difference in weight between the initial mass and the weight after drying, divided by the initial mass, multiplied by 100 wt%.

The organic component in the composition constitutes one or more copolymers CP. The copolymers are derived by copolymerization of polyether macromonomers of the general formula (I) elucidated above, together with anionic monomers. The polyether macromonomers of the general formula (I) comprise a thiovinyl ether moiety and a polyether chain.

The copolymers CP differ essentially from the polymers of the prior art (from US 6,777,517 B1, for example) in the presence of a sulphur atom rather than an oxygen atom directly on the backbone of the copolymer in question.

Another matter to be initially addressed is the organic chemical nomenclature in this application, and the

abbreviations used.

Expressions of the form $C_a$-$C_b$ refer in the context of this invention to chemical compounds or substituents having a defined number of carbon atoms. The number of carbon atoms may be selected from the entire range from a to b, including a and b; a is at least 1 and b is always greater than a. Further specification of the chemical compounds or of the substituents is made using expressions of the form $C_a$-$C_b$ V. V here stands for a class of chemical compound or substituent class, as for example for alkyl compounds or alkyl substituents.

The collective terms indicated for the various substituents have the following specific definition:

$C_1$-$C_{22}$ Alkyl: straight-chain or branched hydrocarbon radicals having up to 22 carbon atoms, for example $C_1$-$C_{10}$ alkyl or $C_{11}$-$C_{22}$ alkyl, preferably $C_1$-$C_{10}$ alkyl for example $C_1$-$C_3$ alkyl, such as methyl, ethyl, propyl, isopropyl, or $C_4$-$C_6$ alkyl, n-butyl, sec-butyl, tert-butyl, 1,1-dimethylethyl, pentyl, 2-methylbutyl, 1,1-dimethylpropyl, 1,2-dimethylpropyl, 2,2-dimethylpropyl, 1-ethylpropyl, hexyl, 2-methylpentyl, 3-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 2-ethylbutyl, 1,1,2-trimethylpropyl, 1,2,2-trimethylpropyl, 1-ethyl-1-methylpropyl, 1-ethyl-2-methylpropyl, or $C_7$-$C_{10}$ alkyl, such as heptyl, octyl, 2-ethylhexyl, 2,4,4-trimethylpentyl, 1,1,3,3-tetramethylbutyl, nonyl or decyl, and also their isomers.

$C_2$-$C_{20}$ Alkenyl: unsaturated, straight-chain or branched hydrocarbon radicals having 2 to 20 carbon atoms and one, two or three, preferably one double bond(s) in any position, for example $C_2$-$C_{10}$ alkenyl or $C_{11}$-$C_{20}$ alkenyl, preferably $C_2$-$C_{10}$ alkenyl such as $C_2$-$C_4$ alkenyl, such as ethenyl, 1-propenyl, 2-propenyl, 1-methylethenyl, 1-butenyl, 2-butenyl, 3-butenyl, 1-methyl-1-propenyl, 2-methyl-1-propenyl, 1-methyl-2-propenyl, 2-methyl-2-propenyl, or $C_5$-$C_6$ alkenyl, such as 1-pentenyl, 2-pentenyl, 3-pentenyl, 4-pentenyl, 1-methyl-1-butenyl, 2-methyl-1-butenyl, 3-methyl-1-butenyl, 1-methyl-2-butenyl, 2-methyl-2-butenyl, 3-methyl-2-butenyl, 1-methyl-3-butenyl, 2-methyl-3-butenyl, 3-methyl-3-butenyl, 1,1-dimethyl-2-propenyl, 1,2-dimethyl-1-propenyl, 1,2-dimethyl-2-propenyl, 1-ethyl-1-propenyl, 1-ethyl-2-propenyl, 1-hexenyl, 2-hexenyl, 3-hexenyl, 4-hexenyl, 5-hexenyl, 1-methyl-1-pentenyl, 2-methyl-1-pentenyl, 3-methyl-1-pentenyl, 4-methyl-1-pentenyl, 1-methyl-2-pentenyl, 2-methyl-2-pentenyl, 3-methyl-2-pentenyl, 4-methyl-2-pentenyl, 1-methyl-3-pentenyl, 2-methyl-3-pentenyl, 3-methyl-3-pentenyl, 4-methyl-3-pentenyl, 1-methyl-4-pentenyl, 2-methyl-4-pentenyl, 3-methyl-4-pentenyl, 4-methyl-4-pentenyl, 1,1-dimethyl-2-butenyl, 1,1-dimethyl-3-butenyl, 1,2-dimethyl-1-butenyl, 1,2-dimethyl-2-butenyl, 1,2-dimethyl-3-butenyl, 1,3-dimethyl-1-butenyl, 1,3-dimethyl-2-butenyl, 1,3-dimethyl-3-butenyl, 2,2-dimethyl-3-butenyl, 2,3-dimethyl-1-butenyl, 2,3-dimethyl-2-butenyl, 2,3-dimethyl-3-butenyl, 3,3-dimethyl-1-butenyl, 3,3-dimethyl-2-butenyl, 1-ethyl-1-butenyl, 1-ethyl-2-butenyl, 1-ethyl-3-butenyl, 2-ethyl-1-butenyl, 2-ethyl-2-butenyl, 2-ethyl-3-butenyl, 1,1,2-trimethyl-2-propenyl, 1-ethyl-1-methyl-2-propenyl, 1-ethyl-2-methyl-1-propenyl or 1-ethyl-2-methyl-2-propenyl, and also $C_7$-$C_{10}$ alkenyl, such as the isomers of heptenyl, octenyl, nonenyl or decenyl.

$C_1$-$C_{30}$ Alkylene: straight-chain or branched hydrocarbon radicals having 1 to 30 carbon atoms, for example $C_1$-$C_{10}$ alkylene or $C_{11}$-$C_{20}$ alkylene, preferably $C_1$-$C_{10}$ alkylene, more particularly methylene, dimethylene, trimethylene, tetramethylene, pentamethylene or hexamethylene.

$C_3$-$C_{15}$ Cycloalkyl: monocyclic, saturated hydrocarbon groups having 3 up to 15 carbon ring members, preferably $C_3$-$C_8$ cycloalkyl such as cyclopropyl, cyclobutyl, cyclopentyl, cyclohexyl, cycloheptyl or cyclooctyl, and also a saturated or unsaturated cyclic system, such as norbornyl or norbenyl, for example.

Aryl: a mono- to tricyclic aromatic ring system containing 6 to 14 carbon ring members, e.g. phenyl, naphthyl or anthracenyl, preferably a mono- to bicyclic, more preferably a monocyclic aromatic ring system.

It is preferred for the polyether macromonomer to conform to the general formula (Ia)

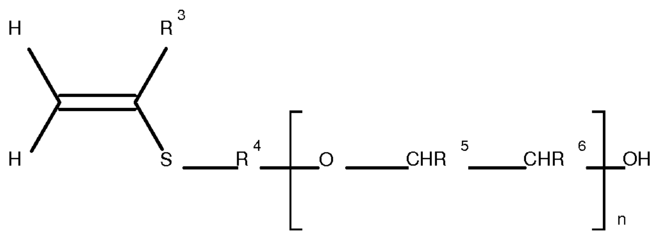

(Ia)

where

- $R^3$ is H or methyl, preferably H,
- $R^4$ is a linear or branched $C_2$-$C_{10}$ alkylene group, preferably $C_2$-$C_4$ alkylene group, more preferably $C_2$ alkylene group,
- $R^5$ and $R^6$ independently of one another are identical or different and are H, methyl or ethyl, preferably H, and especially preferably more than 80 mole per cent, even more preferably more than 90 mole per cent, of the groups (-O-$CHR^5$-$CHR^6$) are in the form of ethylene glycol (-O-$CH_2$-$CH_2$-), and
- n independently at each occurrence is identical or different and is an integer from 20 to 200, preferably 60

to 150, especially preferably 100 to 150.

In the formula (Ia), $R^3$ is H or methyl, preferably H, $R^4$ is a linear or branched $C_2$-$C_{10}$ alkylene group, preferably a linear $C_2$-$C_{10}$ group, more particularly a linear or branched, and preferably a linear $C_2$-$C_4$ alkylene group. Examples include 1,2-ethylene, 1,3-propylene and 1,4-butylene groups, and with very particular preference $R^4$ is a 1,2-ethylene group $-CH_2CH_2-$.

The group $-[-O-CHR^5-CHR^6-]_n-$ in formula (Ia) is a polyalkylene glycol group comprising n alkylene glycol groups $-O-CHR^5-CHR^6-$, it being possible for the alkylene glycol groups in each case to be identical or different. $R^5$ and $R^6$ independently of one another are H, methyl or ethyl, preferably H or methyl, and very particularly H, with the proviso that the sum of the carbon atoms in the radicals $R^5$ and $R^6$ is in each case 0 to 2 per alkylene glycol group. Where different alkylene glycol groups are present, they may be arranged in any order - for example randomly, in alternation or blockwise - and this is also the case for the polyether macromonomers of the general formula (I). In one preferred embodiment at least 80 mol%, preferably at least 90 mol%, of the alkylene glycol groups are ethylene glycol groups. With particular preference they are exclusively ethylene glycol groups, i.e. $R^5$ and $R^6$ are H.

The monomers of the general formula (I) or else of the general formula Ia ($R^1$ and $R^2$ = H in formula (II) in the case of formula Ia) are obtainable by alkoxylation of unsaturated compounds of the general formula (II)

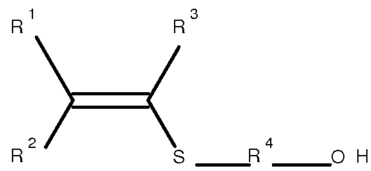

(II)

,

where the radicals $R^3$ and $R^4$ have the definitions stated above for the formulae (I) and (Ia).

This is done by reacting a compound (II) containing a hydroxyl group with the desired amount of alkylene oxides and/or alkylene ether oxides, more particularly $C_2$ to $C_4$ alkylene oxides, more preferably ethylene oxide.

Carrying out an alkoxylation is familiar in principle to the skilled person. It is generally advisable here to avoid acids as a catalyst for the alkoxylation. In one preferred embodiment of the invention, the alkoxylation is a base-catalysed alkoxylation. For this purpose, the compound (II) used as starting material may be admixed with basic catalysts in a pressure reactor, more particularly with alkali metal hydroxides, preferably potassium hydroxide, or with alkali metal alkoxides, such as potassium methoxide, for example.

The alkoxylation, however, can also be performed by different methods. For example, double hydroxide clays can be used, as described in DE 4325237 A1, or double metal cyanide catalysts (DMC catalysts) can be used. Examples of suitable DMC catalysts are disclosed in DE 10243361 A1, more particularly in paragraphs [0029] to [0041] and in the literature cited therein. For example, catalysts of the Zn-Co type can be used. For the performance of the reaction, the alcohol $(R^1)(R^2)-CH-CH_2-OH$ can be admixed with the catalyst, and the mixture can be dewatered as described above and reacted with the alkylene oxides as described. It is customary to use not more than 1000 ppm of catalyst, relative to the mixture, and in view of this small amount, the catalyst can remain in the product. The amount of catalyst may in general be less than 1000 ppm, as for example 250 ppm or less.

The monomer compounds of the general formula (I), preferably of the general formula (Ia), which are present in copolymerized form in the copolymer CP may be identical or different independently of one another. In other words, there may be two or more kinds of the monomer compounds (I) in copolymerized form in the copolymer, and also two or more kinds of polyether macromonomers of the general formula (I) and/or (Ia). There may, for example, be mixtures of different compounds of the general formula (I), preferably of the general formula (Ia).

The sulphur-containing polyether macromonomers of the general formula (I) and/or of the general formula (Ia) can be converted into the copolymer CP by a radical copolymerization together with an anionic monomer. The term "anionic monomer" preferably denotes a monomer which is present in ionic form and comprises at least one group that carries negative charge. The term "anionic monomer" may also be interpreted to include monomers which are at least also partly present in their acid form (protonated form), in the sense of a pH-dependent acid/base equilibrium. Anionic monomers, accordingly, also include anionogenic monomers which can be converted by bases from their acidic form (protonated form) into their anionic form. Examples of the negative charges in anionic monomers are carboxylate, phosphate, phosphonate or sulphonate groups, with carboxylate, phosphate or phosphonate groups being preferred. Independently of one another there may be identical or different anionic monomers present in copolymerized form in the copolymer CP.

The function of the anionic groups is to ensure interaction of the organic copolymers with the inorganic compounds. The assumption is that electrostatic interactions play a part here. In this way, in particular, finely divided inorganic

particles are stabilized, and are particularly effective as accelerators. Further details of the anionic monomers are given in the description below.

The preparation may take place in particular by means of radical polymerization of unsaturated compounds of the general formula (I), preferably (Ia), and also the anionic monomers and, optionally, further monomers. Methods for the radical polymerization of monomers are known in principle to the skilled person.

The radical polymerization may take place in bulk or, preferably, in solution. In the case of polymerization in solution, the choice of solvent is guided by the nature of the unsaturated compounds (I) and also of the other monomers, particularly by the hydrophilicity of the monomers. The polymerization may take place in particular in polar solvents, more preferably in aqueous solution. With preference it is possible to use aqueous solutions in which the solvent or solvent mixture used comprises at least 50 wt% of water. Present as well there may be further, water-miscible solvents, alcohols for example. An aqueous solvent preferably comprises at least 70 wt% of water, more preferably at least 90 wt% of water. With preference it is possible to operate with water exclusively.

To start the polymerization, in a manner known in principle, initiators for the radical polymerization are used. These may in particular be thermal polymerization initiators, examples being peroxides or azo initiators. The polymerization temperature is selected by the skilled person according to the desired outcome. A temperature of 10°C to 100°C has become established, particularly for polymerization in aqueous solution. However, the radical polymerization may also be performed by other technologies; it may be, for example, a photopolymerization using photoinitiators.

The pH in the course of the polymerization in aqueous solution may be selected by the skilled person according to the desired outcome. The polyether macromonomer compounds (I) or (Ia) are stable to hydrolysis even in the acidic pH range. This distinguishes them from the analogous vinylether compounds $H_2C=CH-O-R-(AO)_x$ known in the prior art, which tend toward hydrolysis in the acidic range, especially at pH levels below 3. This significantly reduces their possibilities for use. With particular advantage, the compounds (I) or (Ia), together with further monomers, can be polymerized radically in aqueous solution in the acidic pH range, more particularly at a pH of 1 to 6, preferably 1 to 5, and especially pH 1 to 3. This may be followed by neutralization or by adjustment to an alkaline pH.

The radical polymerization may be carried out for example by a batch method, a semi-batch method or by a continuous method. One suitable continuous method is described in WO 2009/100956 A2, for example.

In the radical polymerization of unsaturated polyether macromonomers of the general formula (I), preferably (Ia), with anionic monomers, such as salts of acrylic acid, for example, in aqueous solution, there are various techniques that can be employed.

In one embodiment of the invention, a mixture of the monomers, as they are or in solution, is charged to the reaction vessel, and then the polymerization is started, for example by addition of a thermal polymerization initiator and raising of the temperature.

In another embodiment of the invention, the reaction vessel is charged initially with a solution of the unsaturated compounds (I), and also, optionally, with a portion of the further monomers and a portion of a thermal polymerization initiator. In this embodiment, not more than 25 wt% of the further monomers ought to be included in the initial charge. The remaining amount of further monomers, and also the remaining amount of the initiator, are added after the start of the polymerization, in particular after heating to polymerization temperature. In this case, preferably, a solution of further monomers and a solution of the initiator are metered continuously into the reaction vessel.

In one preferred embodiment of the invention, the unsaturated polyether macromonomers (I) (corresponding to the unsaturated compounds (I)) and also the further anionic monomers (corresponding to further monomers) are metered gradually into the polymerization reactor which contains at least a certain amount of solvent, more particularly an aqueous solvent. In the case of this embodiment, only a portion of the unsaturated compounds (I), of the further monomers and of the initiator is included in the initial reaction vessel charge, in which case the amount of the monomers introduced initially ought not to exceed 25 wt% of the total amount, preferably 10 wt% of the total amount of monomers envisaged, and, moreover, the molar ratio of the monomers included in the initial charge ought to be selected in accordance with the ratio intended in the polymer. The deviation ought in general to be not more than +/- 20%, preferably not more than +/- 10%, of the intended ratio. With particular preference the ratio of monomers included in the initial charge corresponds to the desired monomer ratio.

The polymerization of the monomer fractions initially introduced is first of all started. This can be done by heating the batch to the desired polymerization temperature. Alternatively an initiator can be added that starts the polymerization even at room temperature, such as a redox initiator. The polymerization starts when the initiator is added to the monomers. After the start, the unsaturated compounds (I) and the further monomers are metered in, preferably as solutions. The monomers in this case may be metered in separately, or else a mixture of unsaturated compounds (I) and of further monomers, preferably a solution of unsaturated compounds (I) and also further monomers in a suitable solvent, can be metered in. In the latter case, the ratio of the unsaturated compounds (I) to the further monomers is naturally fixed, while in the former case the ratio can also be varied during the polymerization. The initiator is likewise metered in as a solution in a suitable solvent.

The metering rate for the addition of the unsaturated compounds (I) and of the further monomers ought here

to be selected in each case in such a way as to avoid too great an excess of unpolymerized unsaturated compounds (I) and/or of unpolymerized further monomers in the reaction vessel. In particular, an excess of unpolymerized unsaturated compounds (I) ought to be avoided. The molar ratio of unsaturated compounds (I)/further monomers will be designated x hereinafter. The metering rates of the monomers ought preferably to be selected such that the molar ratio of the monomers entering the reactor deviates by not more than +/- 20%, preferably not more than +/- 10%, of the intended ratio; of course, the total amount of the monomers must correspond to the desired value.

The described embodiment of the polymerization leads to copolymers having particularly good performance properties. Without wishing to be tied to any particular theory, the effect appears to be attributable to particularly uniform incorporation of the monomers in the case of the preferred embodiment.

The average molecular weight $M_w$ of the copolymers CP, as determined by gel permeation chromatography (GPC), is preferably 5000 to 200 000 g/mol, more preferably 10 000 to 80 000 g/mol, and very preferably 20 000 to 70 000 g/mol. The polymers were analysed for average molar mass by means of size exclusion chromatography (column combinations: OH-Pak SB-G, OH-Pak SB 804 HQ and OH-Pak SB 802.5 HQ from Shodex, Japan; eluent: 80 vol% aqueous solution of $HCO_2NH_4$ (0.05 mol/l) and 20 vol% acetonitrile; injection volume 100 $\mu$l; flow rate 0.5 ml/min). The calibration for determining the average molar mass was made using linear poly(ethylene oxide) and polyethylene glycol standards.

The water-soluble comb polymer with suitability as a superplasticizer for hydraulic binders preferably meets the requirements of industrial standard EN 934-2 (February 2002).

As a result of the presence of the anionic charge and of the relatively highly water-soluble polyether side chains, the copolymers CP are notable for decidedly good water-solubility, especially if the fraction of ethylene glycol in the polyether side chains is high. In the general formula (I) or else (Ia), accordingly, $R^5$ and $R^6$ are preferably H, and with more particular preference more than 80 mol%, even more preferably more than 90 mol%, of the groups (-O-CHR$^5$-CHR$^6$) are present in the form of ethylene glycol ($-O-CH_2-CH_2-$). As a result, the activity of the accelerator compositions is particularly high.

The side chain length of the polyether side chains, as defined by the parameter n in the formula (I) or (Ia), is an important variable. Preferably n is an integer from 20 to 200, more preferably an integer from 60 to 150, and most preferably an integer from 100 to 150. It has emerged that relatively long side chains permit even better acceleration effects. The parameter n in the copolymer CP may be identical or different at each occurrence, independently, as a result of the presence of a plurality of structural units of the general formula (I). This means that in one copolymer it is also possible for different side chain lengths to be embodied. The possibility of the presence of identical or different substituents in the copolymer CP is valid analogously for $R^1$ to $R^7$ in the general formula (I), and/or for $R^3$ to $R^6$ in the general formula (Ia). It is therefore entirely possible for different embodiments or else identical embodiments in accordance with the general formula (I) to be present alongside one another in a copolymer CP. The same applies with respect to the embodiments of the general formula (Ia).

In preferred compositions, n in the formulae (I) or (Ia) is an integer from 60 to 150, preferably 100 to 150.

Preferred compositions are those where the anionic monomer comprises at least one carboxylate, phosphate, phosphonate, or sulphonate group, and where one or more of the aforementioned groups may be present. Carboxylate, phosphate, or phosphonate groups are preferred.

Examples of suitable monomers having sulphonate groups include the salts of monoethylenically unsaturated sulphonic acids such as vinylsulphonic acid, 2-acrylamido-2-methylpropanesulphonic acid, 2-acrylamidomethyldodecylsulphonic acid, 2-(meth)acryloyl-oxyethanesulphonic acid, 3-(meth)acryloyloxypropanesulphonic acid, allyloxybenzenesulphonic acid, vinylbenzenesulphonic acid, vinyltoluenesulphonic acid, allylsulphonic acid and methallylsulphonic acid.

Examples of suitable monomers having phosphate and/or phosphonate groups include monoethylenically unsaturated phosphonic or (poly)phosphoric esters and their salts, such as vinylphosphonic acid or esters of hydroxyethyl, hydroxypropyl or hydroxybutyl (meth)acrylate with (poly)phosphoric acid, and the alkali metal salts and ammonium salts thereof, monovinyl phosphate, allylphosphonic acid, monoallyl phosphate, 3-butenylphosphonic acid, mono-3-butenyl phosphate, mono(4-vinyloxybutyl) phosphate, mono(2-hydroxy-3-vinyloxypropyl) phosphate, mono(1-phosphonoxymethyl-2-vinyloxyethyl) phosphate, mono(3-allyloxy-2-hydroxypropyl) phosphate, mono(2-allyloxy-1-phosphonoxymethylethyl) phosphate, 2-hydroxy-4-vinyloxymethyl-1,3,2-dioxaphosphole and 2-hydroxy-4-allyloxymethyl-1,3,2-dioxaphosphole. With all of the monomers it is possible in principle to copolymerize the above-stated monomers in their acidic form and then to convert them to their salt form by establishment of a corresponding low pH, or to utilize the salts directly in their anionic form.

In preferred compositions, the anionic monomer comprises at least one carboxylate group or one phosphate group. In turn, phosphate groups are especially preferred over carboxylate groups. It is assumed that the interaction of the copolymers CP is especially well-pronounced in the case of phosphate groups, and leads to effective stabilization of the inorganic compounds in finely divided form. In this way, particularly efficient accelerators can be obtained.

In preferred compositions, the anionic monomer comprises at least one carboxylate group and is selected from

the group consisting of acrylate, methacrylate, crotonate, maleate, fumarate, itaconate, mesaconate, citraconate or methylenemalonate, it being possible for there to be two of more of the aforementioned monomers in the copolymer. Acrylate and methacrylate are preferred, especially acrylate.

In preferred compositions, the anionic monomer comprises at least one phosphate group and is selected from the group consisting of salts of hydroxyethyl(meth)acrylic acid phosphoric ester (HE(M)A phosphate), salts of hydroxypropyl(meth)acrylic acid phosphoric ester (HP(M)A phosphate) or salts of hydroxybutyl(meth)acrylic acid phosphoric ester (HB(M)A phosphate), it being possible in each case for there to be a plurality of the aforesaid monomers in the copolymer. The methacrylic phosphoric esters are preferred in each case over the corresponding acrylic phosphoric esters, on account of their better hydrolytic stability. Especially preferred are salts of hydroxyethylmethacrylic acid phosphoric ester (HEMA phosphate).

Preferred compositions are those where the molar ratio of the polyether macromonomers of the general formula (I) or of the general formula (Ia) to the anionic monomers is from 1/1 to 1/10, preferably 1/2 to 1/7, more preferably 1/4 to 1/6. It has emerged that in the presence of a relatively high number of anionic monomers relative to the polyether macromonomers in the copolymer CP, the achievable acceleration effects are particularly good.

Where there are two or more kinds of polyether macromonomers of the general formula (I), or else (Ia), the sum of the number of moles of all the polyether macromonomers is formed correspondingly. Similarly, if there are two or more kinds of anionic monomers present, the sum total of the number of moles of all anionic monomers is formed analogously, and the corresponding quotient is formed in order to calculate the above-stated molar ratio.

If there is more polyether macromonomer present than corresponds to a molar ratio of 1/1, the accelerator effect of the formulations becomes weaker, since there are only relatively few groups present having an affinity for the inorganic compounds.

As further monomers, in copolymerized form in the copolymers CP, there may be monomers different from the i) polyether macromonomers of the general formula (I) or (Ia) and from the ii) anionic monomers. The monomer fraction of these further monomers different from i) and ii) is preferably less than 50 mole per cent, preferably less than 30 mole per cent and especially preferably less than 10 mole per cent. Most preferably, apart from the i) polyether macromonomers and the ii) anionic monomers, there are no further monomers in the copolymer CP.

As further monomers it is possible for the copolymers CP to include, for example, ester compounds of acid monomers in copolymerized form.

The esters may more particularly be esters of (meth)acrylic acid, more particularly (meth)acrylic esters with aliphatic or cycloaliphatic ester groups, especially $C_1$-$C_{22}$, preferably $C_2$-$C_{12}$ ester groups. Examples of such compounds include methyl (meth)acrylate, ethyl (meth)acrylate, propyl (meth)acrylate, isopropyl (meth)acrylates, 1-butyl (meth)acrylates, isobutyl (meth)acrylate, tert-butyl (meth)acrylate, pentyl (meth)acrylate, isoamyl (meth)acrylate, hexyl (meth)acrylate, heptyl (meth)acrylates, isodecyl (meth)acrylate, lauryl (meth)acrylates, stearyl (meth)acrylate, behenyl (meth)acrylate, cyclohexyl (meth)acrylate, 4-tert-butylcyclohexyl (meth)acrylate, isobornyl (meth)acrylate, 2-ethylhexyl (meth)acrylate, 2-propylheptyl (meth)acrylate or citronellol (meth)acrylate.

The ester groups may also comprise heteroatoms, more particularly O and/or N atoms. Examples of esters of such kind include hydroxyethyl (meth)acrylate (HE(M)A), hydroxypropyl (meth)acrylate (HP(M)A), hydroxybutyl (meth)acrylate (HB(M)A), ethyldiglycol (meth)acrylate, hydroxypropylcarbamate (meth)acrylate, phenyl (meth)acrylate, benzyl (meth)acrylate, 2-phenylethyl (meth)acrylate, 3-phenylpropyl (meth)acrylate, ureido (meth)acrylate, acetoacetoxyethyl (meth)acrylate, hydroxyethylpyrrolidone (meth)acrylate, tert-butylaminoethyl (meth)acrylate, diethylaminoethyl (meth)acrylate, dimethylaminoethyl (meth)acrylate. Examples of preferred esters of (meth)acrylic acid include hydroxyethyl (meth)acrylate, hydroxypropyl (meth)acrylate, and also hydroxybutyl (meth)acrylate, with preferred monomers being hydroxyethyl acrylate (HEA), hydroxypropyl acrylate (HPA) and hydroxybutyl acrylate (HBA).

Further possible monomers also include monoalkyl polyalkylene glycol (meth)acrylic esters. In this case the alcohol component in the monoalkyl polyalkylene glycol (meth)acrylic esters is an alkoxylated alcohol. Particularly noteworthy here are alkoxylated $C_1$-$C_{18}$ alcohols, preferably alkoxylated methanol, having 2 to 200 mol of ethylene oxide, propylene oxide, butylene oxide or mixtures thereof. The fraction of ethylene oxide in this case is preferably greater than 80 mole per cent, more preferably greater than 90 mole per cent.

Further examples are diethyl maleate, dibutyl maleate, dimethyl maleate, N-substituted maleimides such as N-methyl-, N-phenyl- and N-cyclohexylmaleimide, acrylamide, methacrylamide, N-methyl(meth)acrylamide, N,N-dimethyl(meth)acrilamide, N,N-diethylacrylamide, N-isopropyl(meth)acrylamide, N-methylol(meth)acrylamide, N-hydroxyethyl(meth)acrylamide, N-tert-butyl(meth)acrylamide, N-tert-octyl(meth)acrylamide, N-(1-methylundecyl)(meth)acrylamide, N-cyclohexyl(meth)acrylamide, diacetoneacrylamide, dimethylaminoethyl(meth)acrylamide, dimethylaminopropyl(meth)acrylamide, N,N-dimethyl-N-(meth)acrylamidopropyl-N-(3-sulphopropyl)ammonium betaine, (meth)acryloylmorpholine. Likewise suitable further monomers are monomers containing N-vinyl groups, examples being N-vinylpyrrolidone, N-vinylcaprolactam, N-vinyl-N-methylacetamide, N-vinylimidazole, 2-methyl-1-vinylimidazole, quaternized N-vinylimidazole derivatives, for example 1-vinyl-3-methylimidazolium chloride or methosulphate, N-vinyl-1,2,4-triazole, N-vinylcarbazole, N-vinylformamide and 2-methyl-1-vinylimidazoline.

Additionally suitable are vinyl or allyl ethers such as, for example, methyl vinyl ether, ethyl vinyl ether, propyl vinyl ether, isobutyl vinyl ether, tert-butyl vinyl ether, 2-ethylhexyl vinyl ether, vinyl cyclohexyl ether, vinyl 4-hydroxybutyl ether, decyl vinyl ether, dodecyl vinyl ether, octadecyl vinyl ether, hydroxybutyl vinyl ether, 2-(diethylamino)ethyl vinyl ether, 2-(di-n-butylamino)ethyl vinyl ether or methyldiglycol vinyl ether, and the corresponding allyl compounds.

Additionally suitable are unsaturated alcohols such as 3-buten-1-ol, 2-buten-1-ol, allyl alcohol, isoprenol, prenol and methallyl alcohol.

Additionally suitable are alkoxylated vinyl, allyl, methallyl or isoprenyl ethers with 2-200 mol of ethylene oxide units or mixtures of ethylene oxide units, propylene oxide units and butylene oxide units. The fraction of ethylene oxide in this case is preferably greater than 80 mole per cent, more preferably greater than 90 mole per cent.

Suitable further monomers are likewise N-allyl compounds, examples being diallylamine and N,N-dimethyl-N,N-diallylammonium chloride.

Suitable further monomers are also $\alpha,\beta$-monoethylenically unsaturated nitriles having 3 to 10 carbon atoms, examples being acrylonitrile, methacrylonitrile, fumaronitrile and maleonitrile.

Suitable further monomers are additionally vinylaromatic monomers such as styrene, vinyltoluene or $\alpha$-methylstyrene. Further styrene derivatives satisfy the general formula IV

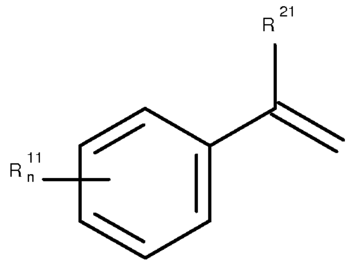

(IV)

in which $R^{11}$ and $R^{21}$ are hydrogen or $C_1$-$C_8$ alkyl and n is 0, 1, 2 or 3. The aromatic ring may additionally carry heteroatoms, examples being 2- and 4-vinylpyridine. Suitable further monomers are, additionally, halogenated alkenes, examples being vinyl chloride, vinylidene chloride, trifluoroethylene and tetrafluoroethylene and also acrolein and methacrolein.

Examples of further, particularly preferred, monoethylenically unsaturated monomers are hydroxyethyl acrylate, hydroxypropyl acrylate and hydroxybutyl acrylate.

Particularly preferred further monoethylenically unsaturated monomers are alkoxylates of ethylenically unsaturated monomers comprising at least one hydroxyl group. Preference in this context is given to alkoxylated vinyl, allyl, methallyl or isoprenyl ethers having 2 to 200, preferably 100 to 150, alkylene oxide units, preferably ethylene oxide units, or mixtures of ethylene oxide, propylene oxide and butylene oxide units. The fraction of ethylene oxide in this case is preferably greater than 80 mole per cent, more preferably greater than 90 mole per cent. Particularly preferred among the alkoxylated vinyl ethers are alkoxylates of hydroxybutyl vinyl ether and/or of hydroxyethyl vinyl ether.

Preference extends to monoalkylpolyalkylene glycol (meth)acrylic esters having 2 to 200, preferably 100 to 150, alkylene oxide units, preferably ethylene oxide units, or mixtures of ethylene oxide, propylene oxide and butylene oxide units. The fraction of ethylene oxide in this case is preferably greater than 80 mol%, more preferably greater than 90 mol%.

Nevertheless, on the basis of their mode of preparation, the copolymers CP of the invention can of course include small amounts of initiators or chain transfer agents.

In general the copolymers CP of the invention comprise 10 to 99 wt% of unsaturated compounds of the general formula (I) and/or of the formula (Ia) in copolymerized form, more particularly 20 to 98 wt%, preferably 30 to 98 wt%, especially preferably 50 to 97 wt%, more preferably 65 to 96 wt% and very preferably 70 to 96 wt%, based in each case on the total amount of monomers in the copolymer CP.

In a preferred composition of the invention, the hardening accelerator has an acceleration factor of more than 2.5, preferably more than 3.0, more particularly more than 3.5. For the determination of the acceleration factor (AF), a test composition of the invention and a reference are produced. The test composition is produced by adding composition of the invention to the mixing water in a manner such that the level of the composition of the invention, based on the solids of the composition of the invention, is 1.5 wt%, based on the Portland cement, and a W/C value of 0.5 is established. The reference contains Portland cement only and is likewise adjusted with water to a W/C value of 0.5 and mixed.

The resulting cement pastes (a mixture of Portland cement and water with W/C = 0.5 as reference; the test mixture of Portland cement and water with W/C = 0.5 and additionally containing composition of the invention, based on the solids of the composition of the invention, at 1.5 wt%, based on the Portland cement) were then introduced separately from one another into an isothermal heat flow calorimeter (e.g. Tam Air by TA Instruments) at 20°C.

The heat flows of both samples were measured. The heat of hydration (HoH) was then calculated according

to equation 1: Equation 1: $HoH = \int_{t_{start}}^{t_{end}} Heat\ flow \bullet dt$, Equation 1: where $t_{start}$ = 1800 s and $t_{end}$ = 21 600 s

The acceleration factor (AF) was calculated according to equation 2:

$$\text{Equation 2: } AF = HoH_{acc}/HoH_{ref}$$

Here, $HoH_{acc}$ is the heat of hydration of the test composition containing the hardening accelerator of the invention as well as cement and water, and $HoH_{ref}$ corresponds to the heat of hydration of the reference containing only water apart from cement.

The invention further relates to a process for producing the compositions of the invention, characterized in that an aqueous solution of a calcium salt is reacted, in the presence of a copolymer CP, in case a) with a silicate salt, in case b) with an aluminium salt and optionally sulphate salt, or in case c) with a silicate salt, aluminium salt and optionally sulphate salt. Optionally following the production of the composition of the invention in aqueous form is a drying step.

The silicate salt in case a) is likewise used as an aqueous solution, as are preferably the sulphate salt and aluminium salt of case b) and the silicate salt, sulphate salt and aluminium salt of case c). This produces the composition of the invention, preferably accelerator composition. This is preferably an aqueous suspension comprising the copolymer CP and the inorganic compound. The optional drying step in case a), case b) or case c) follows the production of the abovementioned aqueous suspension, and a powder is preferably formed. The drying step may constitute a roll drying or spray drying operation, preferably a spray drying operation.

The calcium salt may be, for example, calcium chloride, calcium nitrate, calcium formate, calcium acetate, calcium bicarbonate, calcium bromide, calcium carbonate, calcium citrate, calcium chlorate, calcium fluoride, calcium gluconate, calcium hydroxide, calcium hypochlorite, calcium iodate, calcium iodide, calcium lactate, calcium nitrite, calcium oxalate, calcium phosphate, calcium propionate, calcium silicate, calcium stearate, calcium sulphate, calcium sulphate hemihydrate, calcium sulphate dihydrate, calcium sulphide, calcium tartrate, calcium oxide, calcium sulphamate, calcium methanesulphamate, tricalcium silicate or dicalcium silicate. It is possible to use two or more of the aforementioned salts or else just one.

The calcium salt is preferably not calcium silicate, more particularly not calcium silicate, tricalcium silicate or dicalcium silicate. The silicates calcium silicate, tricalcium silicate or dicalcium silicate are less preferred on account of their low solubility. Preference is given to calcium citrate, calcium nitrate, calcium tartrate, calcium formate, calcium acetate, calcium hydroxide, calcium oxide, calcium sulphamate, calcium methanesulphamate, or calcium sulphate, and one or more of the aforementioned calcium salts may be used. Especially preferred are calcium nitrate, calcium formate, calcium acetate, or calcium hydroxide.

In case a) when using a silicate salt, calcium silicate hydrate (C-S-H) is formed, which has an accelerating effect on hardening. The silicate salt is preferably likewise used in the form of an aqueous solution. The silicate salt is preferably an alkali metal silicate and/or ammonium silicate, tricalcium silicate, dicalcium silicate, calcium silicate and/or silica. The calcium silicates calcium silicate, tricalcium silicate or dicalcium silicate are less preferred on account of their low solubility in water. Preference is given to alkali metal silicates and/or ammonium silicates, with sodium metasilicate and/or potassium metasilicate being especially preferred on account of their ready solubility in water.

Preferred silicate salts are alkali metal silicates and/or ammonium silicates with the formula m $SiO_2 \cdot$ n $M_2O$, where M is Li, Na, K or $NH_4$, preferably Na and/or K, or mixtures thereof, m and n are molar numbers, and the ratio m:n is from approximately 0.9 to approximately 4. The ratio m:n is preferably from approximately 0.9 to approximately 3.8, especially preferably from approximately 0.9 to approximately 3.6.

Silicate salt is to be taken preferably to include compounds comprising silicon dioxide, such as, for example, microsilica, fumed silica, precipitated silica, blast furnace slag and/or silica sand. If using these not so readily water-soluble compounds, there is advantage in working at a pH of greater than 10, preferably greater than 11. An advantageous calcium source is calcium hydroxide and/or calcium oxide.

It is preferred to apply mechanical energy to the reaction mixture, preferably by grinding, in order to activate and/or accelerate the reaction of the calcium salt with the typically low-water-solubility component containing silicon dioxide. The mechanical energy is also advantageous for achieving the desired small particle sizes of the calcium silicate hydrates. The word "grinding" in the present patent application denotes any process in which high shearing forces are exerted on the reaction mixture in order to accelerate the reaction and to obtain a suitable particle size. Grinding may be carried out, for example, in a planetary ball mill in continuous or batch operating mode. An alternative possibility to this is to use an ultradisperser, preferably having a rotary speed of more than 5000 rpm. It is possible, moreover, to use what is called a shaker device, in which small grinding media, preferably having a diameter of less than 1 mm, are combined with the reaction mixture in a container and shaken. Shaker devices of this kind are available, for example,

from the company Fast & Fluid.

The compositions are preferably produced under conditions that avoid the reaction of calcium salt and silicate salt in the absence of the copolymer CP. It is therefore advantageous to include some or all of an aqueous copolymer solution CP in the initial charge to the reaction vessel, and to add aqueous solutions of the calcium salt and of the silicate salt to this initial charge. It is possible to meter in a portion of the aqueous copolymer solution CP separately to the initial charge.

The copolymer CP may also be added partly or wholly (if the copolymer CP is not introduced into the initial charge) to the aqueous calcium salt solution and/or to the aqueous silicate salt solution.

In each of the cases described above, the intention is that the calcium salt and the silicate salt are able to react with one another essentially only in the presence of the copolymers CP.

With preference, the aqueous solution of a calcium salt can be brought to reaction with a) a silicate salt in the presence of a copolymer CP to form calcium silicate hydrate (C-S-H) by a first step in which an aqueous solution of a calcium salt, an aqueous solution of a silicate salt and an aqueous solution of a copolymer CP are each prepared separately and the aqueous solution of the copolymer CP is included wholly or partly in the initial charge to the reaction vessel. In the second step, the calcium salt and silicate salt components are reacted by addition of any remaining copolymer solution CP and of the calcium salt solution and the silicate salt solution over time.

With regard to the process regime in the cases of the reaction of b) aluminium salt and optionally sulphate salt or c) silicate salt, aluminium salt and optionally sulphate salt with the aqueous solution of a calcium salt in the presence of a copolymer CP, considerations which apply are similar to those described above for case a). It is likewise advantageous to include an aqueous solution of a copolymer CP as an initial charge to the reaction vessel and then to meter in solutions of the inorganic components separately. Here as well it is possible to add a portion of the copolymer CP to one of the solutions of the inorganic components, or to meter in a portion of the copolymer separately.

In case b), when using an aluminium salt and optionally sulphate salt, the reaction with the aqueous solution of a calcium salt produces ettringite and/or AFm phases. The ratio of the sulphate ions to the aluminium ions in the reaction mixture is responsible for the phases that are formed. As elucidated above, AFm phases are formed particularly in the absence of sulphate or the presence of small amounts of sulphate. They come about in particular when the molar ratio of sulphate to aluminium is less than 3/2. At higher levels of sulphate, ettringite is formed.

Preferably in case b), when using the sulphate salts and aluminium salts, the molar ratio of sulphate to aluminium in the compositions is from 1.2 to 1.8, especially preferably from 1.3 to 1.7, most preferably from 1.4 to 1.6. In these cases, ettringite is formed preferentially over AFm phases, resulting in good acceleration effects.

The aluminium salt is preferably selected from aluminium sulphate, basic aluminium sulphate, aluminium nitrate and/or alkali metal aluminates. In the case of aluminium sulphate or basic aluminium sulphate, the aluminium salt also serves as sulphate source and the corresponding amount of sulphate must be taken into account. Basic aluminium sulphate is preferably defined by the general formula $Al(OH)_a(SO_4)_b$, where a is 3-2b and b is 0.05 to 1.4, preferably 0.05 to 1.0. This applies both to case b) and to case c).

The sulphate salt is preferably selected from aluminium sulphate, basic aluminium sulphate, alkali metal sulphates and/or alkaline earth metal sulphates. In the case of aluminium sulphate or basic aluminium sulphate, it is again necessary to take account of the aluminium fraction, as elucidated above for the aluminium salts. If calcium sulphate is to be used as alkaline earth metal sulphate, the calcium fraction must be taken into account correspondingly. This applies both to case b) and to case c).

In case c), when using a silicate salt, aluminium salt and optionally sulphate salt, the reaction with the aqueous solution of a calcium salt produces calcium silicate hydrate (C-S-H) and likewise ettringite and/or AFm phases. Here again, as mentioned above, the ratio of the sulphate ions to the aluminium ions in the reaction mixture is responsible for whether ettringite or AFm phases, or else both, are formed. AFm phases are formed particularly in the absence of sulphate or in the presence of small amounts of sulphate. They come about in particular when the molar ratio of sulphate to aluminium is less than approximately 3/2. At higher levels of sulphate, ettringite is formed preferentially.

In case c), when using the silicate salts, sulphate salts and aluminium salts, the molar ratio of sulphate to aluminium in the compositions is preferably from 1.2 to 1.8, especially preferably from 1.3 to 1.7, most preferably from 1.4 to 1.6. In these cases, ettringite is formed preferentially over AFm phases, resulting in good acceleration effects.

The invention also relates to the use of the compositions of the invention for accelerating hardening of chemical construction mixtures comprising cement, slag, preferably granulated blast furnace slag, flyash, finely ground silica, metakaolin, natural pozzolans, calcined oil shale, calcium sulphoaluminate cements and/or calcium aluminate cements, preferably in chemical construction mixtures comprising predominantly cement as hydraulic binder.

The invention relates to construction material mixtures comprising the compositions of the invention, and also cement, slag, preferably granulated blast furnace slag, flyash, finely ground silica, metakaolin, natural pozzolans, calcined oil shale, calcium sulphoaluminate cements and/or calcium aluminate cements.

The level of addition of the compositions of the invention is preferably from 0.01 wt% to 10 wt%, more preferably 0.1 wt% to 6 wt%, very preferably 0.1 wt% to 4 wt% of the solids of the compositions, based on the inorganic binders,

cement, slag, preferably granulated blast furnace slag, flyash, finely ground silica, metakaolin, natural pozzolans, calcined oil shale, calcium sulphoaluminate cements and/or calcium aluminate cements. The level of addition of the compositions of the invention is preferably from 0.01 wt% to 10 wt%, more preferably 0.1 wt% to 6 wt%, very preferably 0.1 wt% to 4 wt% of the solids of the compositions, based on cement.

The cement is preferably selected from Portland cement, high-alumina cement, calcium sulphoaluminate cement, or mixtures of the stated types of cement. Especially preferred is cement of the Portland cement type.

1. Synthesis of the copolymers CP and comparative examples

Table 1 provides an overview of the monomer compositions of all inventive copolymers CP and of the comparative examples, which are labelled (C). Further details on analytical data such as on molecular weight $M_w$ and the solids contents are given in Table 2.

**Table 1: Monomer compositions**

| Copolymer CP or comparative polymer | Anionic group | Polyether macromonomer of formula (I) 1) | Comparative polyether macromonomer (C)) 2) | Molar ratio of anionic monomer to polyether macromonomer |
|---|---|---|---|---|
| CP1 | HEMA phosphate | VME-PEG 135 EO | | 4.5:1 |
| CP2 | HEMA phosphate | VME-PEG 135 EO | | 3:1 |
| CP3 | HEMA phosphate | VME-PEG 135 EO | | 2:1 |
| CP4 | HEMA phosphate | VME-PEG 67 EO | | 3:1 |
| CP5 | HPMA phosphate | VME-PEG 135 EO | | 4.5:1 |
| CP6 | Acrylic acid | VME-PEG 135 EO | | 4.5:1 |
| P7 (C) | HEMA phosphate | | Vinyloxybutyl-polyethylene glycol (135 EO) | 4.5:1 |
| P8 (C) | Acrylic acid | | Vinyloxybutyl-polyethylene glycol (135 EO) | 4.5:1 |
| P9 (C) | Methacrylic acid | | Vinyloxybutyl-polyethylene glycol (135 EO) | 4.5:1 |
| 1) Ethoxylated vinyl mercaptoethanol with stated number of EO units<br>2) Ethoxylated hydroxybutyl vinyl ether (vinyloxy butyl polyethylene glycol) with stated number of EO units | | | | |

**Table 2: Overview of the analytical data.**

| Example | Mn g/mol 1) | Mw g/mol 1) | PD (Mw/Mn) 1) | Solids wt% |
|---|---|---|---|---|
| 1 (CP1) | 19 000 | 25 600 | 1.35 | 33 |
| 2 (CP2) | 19 900 | 27 600 | 1.39 | 32 |
| 3 (CP3) | 50 593 | 91 007 | 1.79 | 33 |
| 4 (CP4) | 22 100 | 29 000 | 1.24 | 30 |
| 5 (CP5) | 17 100 | 21 900 | 1.28 | 31 |
| 6 (CP6) | 37 500 | 50 000 | 1.33 | 36.7 |

(continued)

| Example | Mn g/mol 1) | Mw g/mol 1) | PD (Mw/Mn) 1) | Solids wt% |
|---|---|---|---|---|
| 7 P7(C) | 22 500 | 35 200 | 1.57 | 46.8 |
| 8 P8(C) | --- | --- | --- | 37.4 |
| 9 P9(C) | --- | 18 300 (Mp) | --- | 36.3 |
| 1) Determined by gel permeation chromatography (GPC). The polymers were analysed for average molar mass by size exclusion chromatography (column combinations: OH-Pak SB-G, OH-Pak SB 804 HQ and OH-Pak SB 802.5 HQ from Shodex, Japan; eluent: 80 vol% aqueous solution of $HCO_2NH_4$ (0.05 mol/l) and 20 vol% acetonitrile; injection volume 100 μl; flow rate 0.5 ml/min). The calibration for determining the average molar mass was carried out using linear poly(ethylene oxide) and polyethylene glycol standards. | | | | |

Example 1 (CP1):

Copolymer of 84 wt% VME-135EO and 16 wt% hydroxyethyl methacrylate phosphate

The experimental apparatus consists of a 1000 ml double-wall reactor, thermostat, stirring motor with paddle stirrer, temperature probe, pH probe, and $N_2$ feed line.

The reactor is charged with 172.80 g of water and 106.38 g of VME-135 EO. Then $N_2$ is introduced and the oxygen is displaced. The thermostat is set to T = 75°C and the reactor contents are heated. At about 60°C, 19.79 g of hydroxyethyl methacrylate phosphate (HEMA-P) in 104.6 g of water are added. A pH of about 1.0 - 1.5 is established. Thereafter 7.05 g of 50% strength NaOH are added to establish a pH of about 3. On the addition of the HEMA-P solution, the temperature drops to 50°C. The reactor contents are subsequently heated to 60°C. At this point 1.26 g of Wako VA-044 (2,2'-azobis[2-(2-imidazolin-2-yl)propane] dihydrochloride) in 11.3 g of water are added.

After a reaction time of 3 hours, the reactor contents are cooled to 25°C.

Example 2 (CP2):

Copolymer of 89 wt% VME-135EO and 11 wt% hydroxyethyl methacrylate phosphate

The apparatus used was the same as in Example 1.

The reactor is charged with 328.3 g of water and 202.12 g of VME-135 EO. Then $N_2$ is introduced and the oxygen is displaced. The thermostat is set to T = 75°C and the reactor contents are heated. At about 60°C, 25.06 g of hydroxyethyl methacrylate phosphate (HEMA-P) in 132.5 g of water are added. A pH of about 1.0 - 1.5 is established. Thereafter 8.90 g of 50% strength NaOH are added to establish a pH of about 3. On the addition of the HEMA-P solution, the temperature drops to 50°C. The reactor contents are subsequently heated to 60°C. At this point 2.27 g of Wako VA-044 (2,2'-azobis[2-(2-imidazolin-2-yl)propane] dihydrochloride) in 21.6 g of water are added.

After a reaction time of 3 hours, the reactor contents are cooled to 25°C.

Example 3 (CP3):

Copolymer of 92 wt% VME-135EO and 8 wt% hydroxyethyl methacrylate phosphate

The apparatus used was the same as in Example 1.

The reactor is charged with 328.3 g of water and 202.12 g of VME-135 EO. Then $N_2$ is introduced and the oxygen is displaced. The thermostat is set to T = 75°C and the reactor contents are heated. At about 60°C, 16.71 g of hydroxyethyl methacrylate phosphate (HEMA-P) in 88.31 g of water are added. A pH of about 1.0 - 1.5 is established. Thereafter 5.78 g of 50% strength NaOH are added to establish a pH of about 3. On the addition of the HEMA-P solution, the temperature drops to 50°C. The reactor contents are subsequently heated to 60°C. At this point 2.19 g of Wako VA-044 (2,2'-azobis[2-(2-imidazolin-2-yl)propane] dihydrochloride) in 21.6 g of water are added.

After a reaction time of 3 hours, the reactor contents are cooled to 25°C.

Example 4 (CP4):

Copolymer of 80 wt% VME-67 EO and 20 wt% hydroxyethyl methacrylate phosphate

The apparatus used was the same as in Example 1.

The reactor is charged with 172.80 g of water and 106.38 g of ethoxylated vinyl mercaptoethanol 3000 (VME-PEG 3000). Then $N_2$ is introduced and the oxygen is displaced.

The thermostat is set to T = 75°C and the reactor contents are heated. At about 60°C, 25.94 g of hydroxyethyl methacrylate phosphate (HEMA-P) in 100% form in 137.12 g of water are added. A pH of about 1.0 - 1.5 is established. Thereafter 9.02 g of 50% strength NaOH are added to establish a pH of about 3. On the addition of the HEMA-P solution, the temperature drops to 50°C. The reactor contents are subsequently heated to 60°C. At this point 1.32 g of Wako VA-044 (2,2'-azobis[2-(2-imidazolin-2-yl)propane] dihydrochloride) in 13.2 g of water are added.

After a reaction time of 3 hours, the reactor contents are cooled to 25°C.

The resulting yellowish, slightly cloudy product has a pH of about 2.5 and a solids content of 30%. The average molar mass of the polymer (Mw) is 29 000 g/mol. The polydispersity is 1.24.

Example 5 (CP5):

Copolymer of 84 wt% VME-135EO and 16 wt% hydroxypropyl methacrylate phosphate

The apparatus used was the same as in Example 1.

The reactor is charged with 328.3 g of water and 202.12 g of VME-135 EO. Then $N_2$ is introduced and the oxygen is displaced. The thermostat is set to T = 75°C and the reactor contents are heated. At about 60°C, 33.81 g of hydroxypropyl methacrylate phosphate (HPMA-P) in 198.7 g of water are added. A pH of about 1.0 - 1.5 is established. Thereafter 11.5 g of 50% strength NaOH are added to establish a pH of about 3. On the addition of the HPMA-P solution, the temperature drops to 50°C. The reactor contents are subsequently heated to 60°C. At this point 2.4 g of Wako VA-044 (2,2'-azobis[2-(2-imidazolin-2-yl)propane] dihydrochloride) in 21.6 g of water are added.

After a reaction time of 3 hours, the reactor contents are cooled to 25°C.

Example 6 (CP6):

The experimental apparatus consists of a 1000 ml double-wall reactor, thermostat, stirring motor with paddle stirrer, temperature sensor, pH probe, and $N_2$ feed line.

The reactor is charged with 172.80 g of water and 106.38 g of VME-135 EO. Then $N_2$ is introduced and the oxygen is displaced. The thermostat is set to T = 40°C and the reactor contents are heated.

Preparation of a solution 1 consisting of 5.78 g of acrylic acid in 99.5% form and 30.36 g of water.

Preparation of a solution 2 consisting of 1.12 g of Wako VA-044 (2,2'-azobis[2-(2-imidazolin-2-yl)propane] dihydrochloride) in 10.09 g of water.

At about 30°C, 1.8 ml of solution 1 and 0.06 g of 3-mercaptopropionic acid in 99% form are added. A pH of about 4.0 is established.

0.57 g of 3-mercaptopropionic acid is added to the remaining solution 1.

Addition of 0.6 ml of solution 2.

The thermostat is set to T = 78°C, and the reactor contents are then heated to about 60°C.

At about 60°C and at a pH of about 4.0, the addition of the remaining solution 1 is commenced, over 180 minutes at a rate of 11.5 ml/h, and of the remaining solution 2, over 240 minutes at a rate of 2.7 ml/h.

10 Minutes after the start of the solutions (T internal about 65°C), the thermostat is set to 70°C. This is followed by 120 minutes more of subsequent reaction, after which the reactor contents are cooled to 25°C. The pH of about 3.0 is brought to about 8.4 using 6.66 g of NaOH in 50% form.

The resulting yellowish, slightly cloudy product has a pH of about 8.4 and a solids content of 37%. The average molar mass of the polymer (Mw) is 50 000 g/mol. The polydispersity is 1.33.

Comparative example 7 (P7(C)):

The experimental apparatus consists of a 1000 ml double-wall reactor, thermostat, stirring motor with paddle stirrer, temperature probe, pH probe and $N_2$ feedline.

The reactor is charged with 170.0 g of water and 202.12 g of ethoxylated HBVE (VOBPEG 6000). Then $N_2$ is introduced and the oxygen is displaced. The thermostat is set at T = 40°C and the reactor contents are heated.

At about 35°C, 37.59 g of hydroxyethyl methacrylate phosphate (HEMA-P) in 100% form in 87.72 g of water

are added. A pH of about 1.5 is established. Thereafter 10.20 g of 50% strength NaOH are added in order to set a pH of about 3. The thermostat is set at T = 75°C and the reactor contents are further heated. At about 65°C, 2.40 g of Wako VA-044 (2,2'-azobis[2-(2-imidazolin-2-yl)propane] dihydrochloride) in 21.6 g of water are added.

After 15 minutes, the thermostat is set to T = 70°C.

After a reaction time of 3 hours, the reactor contents are cooled to 20°C. The reactor contents are adjusted to a pH of about 8.1 using 20.16 g of NaOH in 50% form.

The resulting brownish, slightly cloudy product has a solids content of 47%. It forms two phases. The average molar mass of the polymer (Mw) is 35 200 g/mol. The polydispersity is 1.57.

Comparative example 8 (P8(C)):

Copolymer of 94.9 wt% VOB-135EO and 5.1 wt% acrylic acid 100%

The experimental apparatus consists of a 1000 ml double-wall reactor, thermostat, stirring motor with paddle stirrer, temperature sensor, pH probe, and $N_2$ feed line. The reactor is charged with 172.80 g of water and 106.38 g of VOB-135 EO (VOBPEG). Then $N_2$ is introduced and the oxygen is displaced. The thermostat is set to T = 40°C and the reactor contents are heated.

Preparation of a solution 1 consisting of 5.78 g of acrylic acid in 99.5% form and 30.36 g of water.

Preparation of a solution 2 consisting of 1.12 g of Wako VA-044 (2,2'-azobis[2-(2-imidazolin-2-yl)propane] dihydrochloride) in 10.09 g of water.

At about 35°C, 1.8 ml of solution 1 and 0.06 g of 3-mercaptopropionic acid in 99% form are added. A pH of about 5.0 is established.

0.57 g of 3-mercaptopropionic acid is added to the remaining solution 1.

Addition of 0.6 ml of solution 2.

The thermostat is set to T = 78°C, and the reactor contents are then heated to about 60°C.

At about 60°C and at a pH of about 4.0, the addition of the remaining solution 1 is commenced, over 180 minutes at a rate of 11.5 ml/h, and of the remaining solution 2, over 240 minutes at a rate of 2.7 ml/h.

10 minutes after the start of the solutions (T internal about 63°C), the thermostat is set to 70°C. This is followed by 120 minutes more of subsequent reaction, after which the reactor contents are cooled to 25°C. The pH of about 3.0 is brought to about 8.2 using 6.19 g of NaOH in 50% form.

The resulting yellowish, slightly cloudy product has a pH of about 8.2 and a solids content of 37%.

Comparative example 9 (P9(C)):

Copolymer of 93.9 wt% VME-135EO and 6.1 wt% methacrylic acid 100%

The experimental apparatus consists of a 1000 ml double-wall reactor, thermostat, stirring motor with paddle stirrer, temperature sensor, pH probe, and $N_2$ feed line. The reactor is charged with 172.80 g of water and 106.38 g of VOB-(135) EO (VOBPEG). Then $N_2$ is introduced and the oxygen is displaced. The thermostat is set to T = 70°C and the reactor contents are heated.

Preparation of a solution 1 consisting of 6.94 g of methacrylic acid in 99% form and 36.23 g of water.

Preparation of a solution 2 consisting of 1.13 g of Wako VA-044 (2,2'-azobis[2-(2-imidazolin-2-yl)propane] dihydrochloride) in 10.19 g of water.

At about 40°C, 2.1 ml of solution 1 and 0.06 g of 3-mercaptopropionic acid in 99% form are added. A pH of about 4.2 is established.

0.57 g of 3-mercaptopropionic acid is added to the remaining solution 1.

At about 60°C, the addition of 0.6 ml of solution 2 takes place.

At about 65°C and at a pH of about 4.2, the addition of the remaining solution 1 is commenced, over 180 minutes at a rate of 13.7 ml/h, and of the remaining solution 2, over 240 minutes at a rate of 2.7 ml/h.

This is followed by 120 minutes more of subsequent reaction, after which the reactor contents are cooled to 25°C. The pH of about 3.5 is brought to about 8.2 using 6.55 g of NaOH in 50% form.

The resulting yellowish, slightly cloudy product has a pH of about 8.2 and a solids content of 36%.

2. Synthesis examples for the production of the hardening accelerators

Please refer to table 3 for the details of the production of the hardening accelerators in addition with the following explanations.

Calcium silicate hydrate (Acc. 1 to Acc. 9(C))

For the production of hardening accelerators comprising calcium silicate hydrate (C-S-H), first the following solutions were prepared for metered addition and initial charge to the reactor:

Metering solution A: aqueous solution of a calcium salt
163.55 g of 51% calcium nitrate solution.

Metering solution B: aqueous solution of silicate salt
95.84 g of sodium silicate pentahydrate in powder form ($Na_2SiO_3$ x 5 $H_2O$) were stirred in 100.27 g of water at 50°C until dissolution was complete.

Metering solution C: copolymer CP, or comparative polymer
39.24 g, calculated as 100% polymer solids (Table 1), of the corresponding polymer were dissolved in 111.69 g of water.

Initial charge to the reactor vessel (copolymer CP, or comparative polymer):
46.25 g, calculated as 100% solids, of the respective polymer (Table 1) were dissolved in 586.48 g of water and transferred into the reactor as the initial charge.

The synthesis was carried out in a double-wall reactor equipped with an inclined-blade stirrer at a reaction temperature of 20°C. With stirring (300 rpm), the metering solutions A (163.55 g/h), B (196.11 g/h) and C (150.93 g/h), which had been conditioned to 20°C in each case, were metered into the reactor. The respective metering speeds are indicated in brackets.

Following the addition of all the metering solutions, stirring was continued for 5 minutes.

The solids content of the accelerator suspensions was determined by drying 3 g +/- 0.1 g in a porcelain dish in an oven at 60°C for 24 hours. The solids content is shown in Table 3, along with the test results (calorimetry and strengths).

Mixture of calcium silicate hydrate and ettringite (Acc. 11 and Acc. 13(C))

For the production of hardening accelerators comprising a mixture of calcium silicate hydrate and ettringite, first the following solutions were prepared for metered addition and initial charge to the reactor:

Metering solution A: aqueous solution of a calcium salt
30.56 g of $Ca(OH)_2$ are reacted with 76.88 g sulfamic acid in the presence of 250.00 g water.

Metering solution B: aqueous solution of silicate salt
71.87 g of sodium silicate pentahydrate in powder form ($Na_2SiO_3$ x 5 $H_2O$) were stirred in 250.00 g of water at 50°C until dissolution was complete.

Initial charge to the reactor vessel: copolymer CP or comparative polymer and aluminum sulfate 35.00 g, calculated as 100% polymer solids (Table 1), of the corresponding polymer were dissolved in 496.38 g of water and 7.43 g $Al_2(SO_4)_3$ x 18 $H_2O$.

The synthesis was carried out in a double-wall reactor equipped with an inclined-blade stirrer at a reaction temperature of 20°C which was combined with a rotor-stator setup (IKA T25 Ultra Turrax). The metering solutions A (1072.29 g/h), B (965.71 g/h), which had been conditioned to 20°C in each case, were metered directly into the mixing cell of the rotor-stator mixer (volume of mixing cell= 20 $cm^3$). The respective metering speeds are indicated in brackets. The rotor-stator mixing device was connected to the double-wall reactor via a circulation loop. The stirrer of the reactor operated at a speed of 150 rpm, the rotor-stator at a speed of 8000 rpm and the mass throughput of the circulation cycle was set to 6.5 kg/h.

Mixture of calcium silicate hydrate and calcium aluminate hydrate (Acc. 12 and Acc. 14 (C))

For the production of hardening accelerators comprising a mixture of calcium silicate hydrate and calcium aluminate hydrate, first the following solutions were prepared for metered addition and initial charge to the reactor:

Metering solution A: aqueous solution of a calcium salt
33.11 g of $Ca(OH)_2$ are reacted with 63.88 g sulfamic acid in the presence of 250.00 g water.

Metering solution B: aqueous solution of silicate salt
71.87 g of sodium silicate pentahydrate in powder form ($Na_2SiO_3$ x 5 $H_2O$) were stirred in 250.00 g of water at 50°C until dissolution was complete.

Initial charge to the reactor vessel: copolymer CP or comparative polymer and sodium aluminate
35.00 g, calculated as 100% polymer solids (Table 1), of the corresponding polymer were dissolved in 500.00 g of water and 4.10 g $NaAlO_2$.

The synthesis was carried out in a double-wall reactor equipped with an inclined-blade stirrer at a reaction temperature of 20°C which was combined with a rotor-stator setup (IKA T25 Ultra Turrax). The metering solutions A (1040.97 g/h), B (965.71 g/h), which had been conditioned to 20°C in each case, were metered directly into the mixing cell of the rotor-stator mixer (volume of mixing cell= 20 $cm^3$). The respective metering speeds are indicated in brackets. The rotor-stator mixing device was connected to the double-wall reactor via a circulation loop. The stirrer of the reactor operated at a speed of 150 rpm, the rotor-stator at a speed of 8000 rpm and the mass throughput of the circulation cycle was set to 6.5 kg/h.

3. Test results for the hardening accelerators

3.1 Heat flow calorimetry

It is known from the literature that the development of strength by Portland cement is based in particular on the hydration reaction of anhydrous silicate phases ($C_2S$ and $C_3S$) (H.F.W. Taylor, The Cement Chemistry, 2nd Edition, 1997). The hydration processes in clinker phases can be followed using isothermal heat flow calorimetry, as shown in Figure 1.

The acceleration potential of the suspensions produced in the presence of the inventive

copolymers and of the comparative polymers can therefore be evaluated using isothermal heat flow calorimetry. The measurement and evaluation technique is elucidated in more detail below. The experimental series encompasses the measurement of the heat of hydration of a cement in the absence of an additive and in the presence of one of the accelerators listed in Table 3. The level of addition of the accelerators was 1.5 wt% solids, based on the mass of cement, in each case. The water-to-cement ratio (w/c) was always 0.5. The water contribution of the suspensions was taken into account and subtracted from the water added. For the samples Acc. 1 to Acc. 10 (C) Bernburg 42.5 R and for the samples Acc. 11 to Acc. 14 (C) Milke 52.5 R were used as cements.

It is noted that in table 3 the values for the heat of hydration between the two different cement types are not directly comparable as the different heat of hydration values for the cement and water only samples (blank without additive) show (13,20 (J/g) for the Bernburg cement and 30.5 (J/G) for the Milke cement). However for all samples in table 3 the acceleration factors are comparable, because the acceleration factors are calibrated using the blank samples as a reference. In this way the influence of the differently quickly hydrating cements is eliminated.

Figure 1 illustrates the heat flow (total heat transfer rate) over time by way of example for the case of the pure cement, as a reference, and also for the cases of the admixing of suspensions Acc. 1 and Acc. 7 (C). From the integral of the heat flow between 0.5 and 6, the heat of hydration is obtained (see equation 1), which correlates with the development of strength within this time stage.

The acceleration performance of the hardening accelerators is quantified by equation 2:

$$\text{Equation 2: } AF = HoH_{acc}/HoH_{ref}$$

Here, $HoH_{acc}$ corresponds to the heat of hydration of the test composition, which includes the inventive hardening accelerator as well as cement and water, and $HoH_{ref}$ corresponds to the heat of hydration of the reference, which contains only water apart from cement. The acceleration factors obtained in this way are listed in Table 3.

3.2 Compressive strengths (mortar)

The samples were produced in accordance with the standard EN 196-1:
Materials used were as follows:

225 g water
450 g cement
1350 g standard sand

In analogy to the calorimetry experiments, the acceleration potential was tested by adding 1.5 wt% solids of each of accelerators Acc. 1 to Acc. 10(C) to the Bernburg 42.5 R cement. In the usual way, the amount of water in the respective suspensions Acc. 1 to Acc. 9 (C) was taken into account. The compressive strengths were measured after 6 hours and after 24 hours.

**Table 3: Details of the hardening accelerators and test results Construction Research & Technology GmbH**

| Accelerator sample[1)] | Accelerator type | Polymer | Solids content [%] | Heat of hydration [J/g of cement] | Compr. strength after 6 h[MPa] | Compr.strength after 24 h[MPa] | Acceleration factor (AF) |
|---|---|---|---|---|---|---|---|
| Cement Bernburg 42.5 R (reference) | - | - | - | 13.20 | Not measurable | 14.86 | 1.00 |
| Acc.1 | C-S-H suspension | CP1 | 20.30 | 60.97 | 2.90 | 24.33 | 4.62 |
| Acc. 2 | C-S-H suspension | CP2 | 20.39 | 52.81 | 2.49 | 24.09 | 4.00 |
| Acc. 3 | C-S-H suspension | CP3 | 20.29 | 52.31 | 2.09 | 23.67 | 3.96 |
| Acc. 4 | C-S-H suspension | CP4 | 20.84 | 33.76 | - | - | 2.56 |
| Acc. 5 | C-S-H suspension | CP5 | 20.43 | 44.42 | | | 3.37 |
| Acc. 6 | C-S-H suspension | CP6 | 20.84 | 34.63 | 0.82 | 19.19 | 2.62 |
| Acc. 7(C) | C-S-H suspension | P7(C) | 20.60 | 28.56 | | | 2.16 |
| Acc. 8(C) | C-S-H suspension | P8(C) | 20.37 | 27.87 | | | 2.11 |
| Acc. 9(C) | C-S-H suspension | P9(C) | 20.51 | 31.15 | | | 2.36 |
| Acc. 10(C) | Calcium formate | - | 100 | 23.07 | Not measurable | 15.57 | 1.75 |
| Cement Milke 52.5 R (reference) | - | - | - | 30.50 | | | 1.00 |
| Acc. 11 | C-S-H +ettringite suspension | CP1 | 14.81 | 88.28 | | | 2.89 |
| Acc. 12 | C-S-H + C-A-H suspension | CP1 | 14.66 | 106.21 | | | 3.48 |
| Acc. 13 (C) | C-S-H +ettringite suspension | P7(C) | 14.15 | 58.55 | | | 1.92 |
| Acc. 14 (C) | C-S-H + C-A-H suspension | P7(C) | 14.27 | 52.80 | | | 1.73 |

The results found in the calorimetry experiments show the heat of hydration of the cement. This heat of hydration correlates well with the development of strength by the cement. In table 3 two different types of cement were used.

The results in Table 3 for the Bernburg cement show that the inventive hardening accelerators Acc. 1 to Acc. 6 basing on calcium silicate hydrate exhibit very effective acceleration of hardening, relative to the comparative examples with polyether macromonomers which do not conform to the general formula (I) (Acc. 7(C), (Acc. 8(C) and (Acc. 9(C)) and likewise relative to calcium formate (Acc. 10(C). Very effective in particular are copolymers CP1 to CP3, with phosphate-containing anionic monomers and relatively long side chains. Acrylate as carboxylic anionic monomer is less advantageous relative to phosphate-containing monomers. The comparative examples with copolymers without thio groups (P7(C) in Acc. 7(C), P8(C) in Acc. 8(C) and P9(C) in Acc. 9(C) are significantly less good compared to the examples according to the invention.

In table 3 Acc. 11 and Acc. 12 as well as the comparative examples Acc. 13 (C) and Acc. 14 (C) were tested with Milke cement. Acc. 11, basing on calcium silicate hydrate and ettringite as well as Acc.12 basing on calcium silicate hydrate and calcium aluminate hydrate (C-A-H is a AFm phase) show also a very good acceleration performance in contrast to the reference examples Acc. 13(C) and Acc. 14(C), which were produced in presence of a non-thio copolymer not according to this invention (P7(C)).

## Claims

**1.** Composition comprising
inorganic compounds selected from calcium silicate hydrate (C-S-H), ettringite or AFm phases, where it is possible for one or more of the stated inorganic compounds to be present and the AFm phases being defined by the general formula $[Ca_2(Al,Fe)(OH)_6] \cdot X \cdot y\ H_2O$, where X is one formula unit of a singly charged anion or half a formula unit of a doubly charged anion; X is preferably hydroxide, ½ sulphate or ½ carbonate, it also being possible for two or more species of the anions to be present jointly, and the parameter y is ≤ 6 and a copolymer CP comprising i) at least one polyether macromonomer of the general formula (I) in copolymerized form

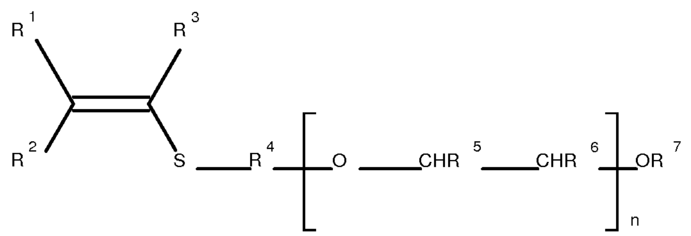

(I)

where

$R^1$, $R^2$ and $R^3$ independently of one another are identical or different and are H or $CH_3$,
$R^4$ is linear or branched $C_1$-$C_{30}$ alkylene,
$R^5$ and $R^6$ independently of one another are identical or different and are H, $C_1$-$C_{20}$ alkyl, $C_3$-$C_{15}$ cycloalkyl, aryl, -$CH_2$-O-$C_1$-$C_{20}$ alkyl, $CH_2$-O-$C_2$-$C_{20}$ alkenyl,
and $R^5$ and $R^6$ may also together form a $C_3$-$C_6$ alkylene,
$R^7$ independently at each occurrence is identical or different and is H, $C_1$-$C_4$ alkyl or

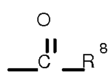

$R^8$ is $C_1$-$C_{22}$ alkyl or $C_2$-$C_{22}$ alkenyl, and
n independently at each occurrence is identical or different and is an integer from 2 to 200,

and

ii) at least one anionic monomer in copolymerized form,

the weight ratio of copolymer CP to calcium in the composition being from 1/20 to 20/1.

**2.** Composition according to Claim 1, the molar ratio of calcium to silicon in the composition being from 0.1 to 40.

**3.** Composition according to Claim 1 or 2, the molar ratio of aluminium to calcium in the composition being from 0 to 1 and the molar ratio of sulphate to calcium in the composition being from 0 to 1.

**4.** Composition according to Claim 3, the molar ratio of sulphate to calcium in the composition being from 0 to 0.25.

**5.** Composition according to Claim 1, there being no silicon and no calcium silicate hydrate (C-S-H), and the molar ratio of aluminium to calcium in the composition being from 0.01 to 2.

**6.** Composition according to any of Claims 1 to 5, the composition being a water-containing suspension and containing 0.05 to 5 mol of calcium per kg of the suspension.

**7.** Composition according to any of Claims 1 to 5, the composition being a powder and comprising 0.25 to 8 mol of calcium per kg of the powder.

**8.** Composition according to any of Claims 1 to 5, the polyether macromonomer conforming to the general formula (Ia)

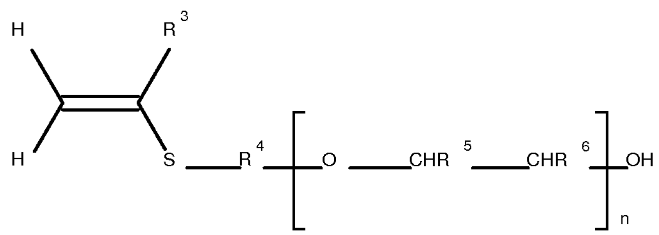
(Ia)

and

$R^3$ being H or methyl, preferably H,
$R^4$ being a linear or branched $C_2$-$C_{10}$ alkylene group, preferably $C_2$ alkylene group,
$R^5$ and $R^6$ independently of one another being identical or different and being H, methyl or ethyl, preferably H, and
n independently at each occurrence being identical or different and being an integer from 20 to 200.

**9.** Composition according to any of Claims 1 to 8, n in the formulae (I) or (Ia) being an integer from 60 to 150, preferably 100 to 150.

**10.** Compositions according to any of Claims 1 to 9, the anionic monomer comprising at least one carboxylate, phosphate, phosphonate or sulphonate group, and it being possible for there to be one or more of the aforesaid groups.

**11.** Composition according to any of Claims 1 to 10, the anionic monomer comprising at least one carboxylate group or phosphate group.

**12.** Composition according to Claim 10 or 11, the anionic monomer comprising at least one carboxylate group and being selected from the group consisting of acrylate, methacrylate, crotonate, maleate, fumarate, itaconate, mesaconate, citraconate or methylenemalonate, it being possible for there to be a plurality of the aforesaid monomers in the copolymer.

**13.** Composition according to Claim 10 or 11, the anionic monomer comprising at least one phosphate group and being selected from the group consisting of salts of hydroxyethyl(meth)acrylic acid phosphoric ester (HE(M)A phosphate), salts of hydroxypropyl(meth)acrylic acid phosphoric ester (HP(M)A phosphate) or salts of hydroxybutyl(meth)acrylic acid phosphoric ester (HB(M)A phosphate), it being possible in each case for there to be a plurality of the aforesaid monomers in the copolymer.

**14.** Composition according to any of Claims 1 to 13, the molar ratio of the polyether macromonomers of the general formula (I) or of the general formula (Ia) to the anionic monomers being from 1/1 to 1/10, preferably 1/2 to 1/7, more preferably 1/4 to 1/6.

**15.** Method for producing the compositions according to any of Claims 1 to 14, **characterized in that** an aqueous solution of a calcium salt is reacted in the presence of a copolymer CP in case a) with a silicate salt, in case b) with an aluminium salt and optionally sulphate salt, or in case c) with a silicate salt, aluminium salt and optionally sulphate salt, followed optionally by a drying step.

**16.** Use of the compositions according to any of Claims 1 to 14 for accelerating hardening of chemical construction mixtures comprising cement, slag, preferably granulated blast furnace slag, flyash, finely ground silica, metakaolin, natural pozzolans, calcined oil shale, calcium sulphoaluminate cements and/or calcium aluminate cements, preferably in chemical construction mixtures comprising predominantly cement as hydraulic binder.

**17.** Construction material mixtures comprising compositions according to any of Claims 1 to 14, and also cement, slag, preferably granulated blast furnace slag, flyash, finely ground silica, metakaolin, natural pozzolans, calcined oil shale, calcium sulphoaluminate cements and/or calcium aluminate cements.

## Patentansprüche

**1.** Zusammensetzung, enthaltend umfassend anorganische Verbindungen ausgewählt aus Calciumsilicathydrat (C-S-H), Ettringit oder AFm-Phasen, wobei eine oder mehrere der angegebenen organischen Verbindungen vorliegen können und die AFm-Phasen durch die allgemeine Formel $[Ca_2(Al,Fe)\ (OH)_6]\cdot X\cdot y\ H_2O$ definiert sind, wobei X für eine Formeleinheit eines einfach geladenen Anions oder eine halbe Formeleinheit eines doppelt geladenen Anions steht, X vorzugsweise für Hydroxid, ½ Sulfat oder ½ Carbonat steht, wobei auch zwei oder mehr Spezies der Anionen gemeinsam vorliegen können und der Parameter $y \leq 6$ ist,
und ein
Copolymer CP umfassend i) mindestens ein Polyethermakromonomer gemäß der allgemeinen Formel (I) in copolymerisierter Form

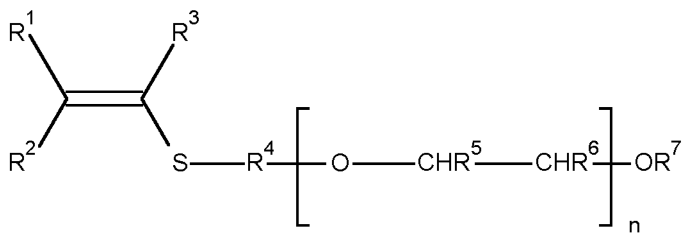

(I)

wobei

$R^1$, $R^2$ und $R^3$ unabhängig voneinander, gleich oder verschieden, H oder $CH_3$,
$R^4$ lineares oder verzweigtes $C_1$-$C_{30}$-Alkylen,
$R^5$ und $R^6$ unabhängig voneinander, gleich oder verschieden, H, $C_1$-$C_{20}$-Alkyl,

$C_3$-$C_{15}$-Cycloalkyl, Aryl, -$CH_2$-O-$C_1$-$C_{20}$-Alkyl, $CH_2$-O-$C_2$-$C_{20}$-Alkenyl,
wobei $R^5$ und $R^6$ auch gemeinsam ein $C_3$-$C_6$-Alkylen bilden können,

$R^7$ unabhängig voneinander, jeweils gleich oder verschieden, H, $C_1$-$C_4$-Alkyl oder

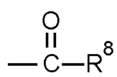

$R^8$ $C_1$-$C_{22}$-Alkyl oder $C_2$-$C_{22}$-Alkenyl, und
n unabhängig voneinander jeweils gleich oder verschieden ist und eine ganze Zahl von 2 bis 200 bedeuten,

und

ii) mindestens ein anionisches Monomer in copolymerisierter Form,

wobei das Gewichtsverhältnis von Copolymer CP zu Calcium in der Zusammensetzung von 1/20 bis 20/1 beträgt.

2. Zusammensetzung nach Anspruch 1, wobei das molare Verhältnis von Calcium zu Silizium in der Zusammensetzung von 0,1 bis 40 beträgt.

3. Zusammensetzung nach Anspruch 1 oder 2, wobei das molare Verhältnis von Aluminium zu Calcium in der Zusammensetzung von 0 bis 1 beträgt und das molare Verhältnis von Sulfat zu Calcium in der Zusammensetzung von 0 bis 1 beträgt.

4. Zusammensetzung nach Anspruch 3, wobei das molare Verhältnis von Sulfat zu Calcium in der Zusammensetzung von 0 bis 0,25 beträgt.

5. Zusammensetzung nach Anspruch 1, wobei kein Silicium und kein Calciumsilikathydrat (C-S-H) enthalten sind und das molare Verhältnis von Aluminium zu Calcium in der Zusammensetzung von 0,01 bis 2 beträgt.

6. Zusammensetzung nach einem der Ansprüche 1 bis 5, wobei die Zusammensetzung eine wasserhaltige Suspension ist und 0,05 bis 5 mol Calcium bezogen auf 1 kg der Suspension enthält.

7. Zusammensetzung nach einem der Ansprüche 1 bis 5, wobei die Zusammensetzung ein Pulver ist und 0,25 bis 8 mol Calcium bezogen auf 1 kg des Pulvers enthält.

8. Zusammensetzung nach einem der Ansprüche 1 bis 5, wobei das Polyethermakromonomer der allgemeinen Formel (Ia)

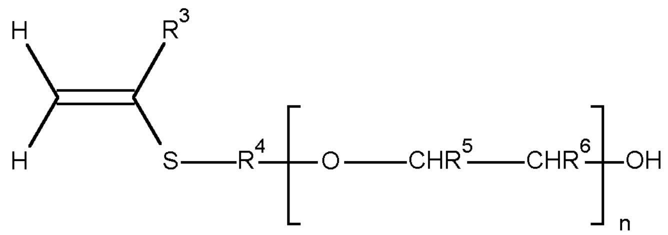

(Ia)

entspricht und

$R^3$ H oder Methyl, bevorzugt H
$R^4$ eine lineare oder verzweigte $C_2$-$C_{10}$-Alkylengruppe, bevorzugt $C_2$-Alkylengruppe
$R^5$, $R^6$ unabhängig voneinander, gleich oder verschieden, H, Methyl oder Ethyl, bevorzugt H, und
n unabhängig voneinander gleich oder verschieden ist und eine ganze Zahl von 20 bis 200 bedeuten.

9. Zusammensetzung nach einem der Ansprüche 1 bis 8, wobei n in den Formeln (I) oder (Ia) eine ganze Zahl von 60 bis 150 ist, bevorzugt 100 bis 150.

10. Zusammensetzungen nach einem der Ansprüche 1 bis 9, wobei das anionische Monomer mindestens eine Carboxylat-, Phosphat-, Phosphonat-, oder Sulfonatgruppe umfasst und eine oder mehrere der vorstehend genannten Gruppen vorhanden sein können.

11. Zusammensetzung nach einem der Ansprüche 1 bis 10, wobei das anionische Monomer mindestens eine Carboxylatgruppe oder eine Phosphatgruppe umfasst.

12. Zusammensetzung nach Anspruch 10 oder 11, wobei das anionische Monomer mindestens eine Carboxylatgruppe umfasst und ausgewählt ist aus der Gruppe von Acrylat, Methacrylat, Crotonat, Maleat, Fumarat, Itaconat, Mesaconat, Citraconat oder Methylenmalonat, wobei mehrere der vorstehend genannten Monomere im Copolymer vorliegen können.

13. Zusammensetzung nach Anspruch 10 oder 11, wobei das anionische Monomer mindestens eine Phosphatgruppe umfasst und ausgewählt ist aus der Gruppe von Salzen des Hydroxyethyl(meth)acrylsäurephosphorsäureesters (HE(M)A - Phosphat), Salzen des Hydroxypropyl(meth)acrylsäurephosphorsäureesters (HP(M)A - Phosphat) oder

Salzen des Hydroxybutyl(meth)acrylsäurephosphorsäureesters (HB(M)A - Phosphat), wobei jeweils mehrere der vorstehend genannten Monomere im Copolymer vorliegen können.

**14.** Zusammensetzung nach einem der Ansprüche 1 bis 14, wobei das Molverhältnis der Polyethermakromonomere der allgemeinen Formel (I) oder der allgemeinen Formel (Ia) zu den anionischen Monomeren von 1 / 1 bis 1 / 10 beträgt, bevorzugt 1 / 2 bis 1 / 7, besonders bevorzugt 1 / 4 bis 1 / 6.

**15.** Verfahren zur Herstellung der Zusammensetzungen gemäß einem der Ansprüche 1 bis 14, **dadurch gekennzeichnet, dass** eine wässrige Lösung eines Calciumsalzes in Anwesenheit eines Copolymers CP im Fall a) mit einem Silikatsalz, im Fall b) mit einem Aluminiumsalz und optional Sulfatsalz oder im Fall c) mit einem Silikatsalz, Aluminiumsalz und optional Sulfatsalz zur Reaktion gebracht werden und optional sich ein Trocknungsschritt anschließt.

**16.** Verwendung der Zusammensetzungen gemäß einem der Ansprüche 1 bis 14 zur Erhärtungsbeschleunigung von bauchemischen Mischungen, enthaltend Zement, Schlacke, vorzugsweise granulierte Hochofenschlacke, Flugasche, Silikamehl, Metakaolin, natürliche Puzzolane, kalzinierten Ölschiefer, Calciumsulfoaluminatzemente und/oder Calciumaluminatzemente, vorzugsweise in bauchemischen Mischungen, die überwiegend Zement als hydraulisches Bindemittel enthalten.

**17.** Baustoffmischungen enthaltend Zusammensetzungen gemäß einem der Ansprüche 1 bis 14, sowie Zement, Schlacke, vorzugsweise granulierte Hochofenschlacke, Flugasche, Silikamehl, Metakaolin, natürliche Puzzolane, kalzinierten Ölschiefer, Calciumsulfoaluminatzemente und/oder Calciumaluminatzemente.

**Revendications**

**1.** Composition comprenant
des composés inorganiques choisis parmi le silicate de calcium hydraté (C-S-H), l'ettringite ou les phases AFm, où il est possible qu'un ou plusieurs des composés inorganiques cités soient présents et que les phases AFm soient définies par la formule générale $[Ca_2(Al,Fe)(OH)_6] \cdot X \cdot y\ H_2O$, où X représente une formule unitaire d'un anion à une seule charge ou une demi-formule unitaire d'un anion doublement chargé ; X représente préférentiellement un hydroxyde, ½ sulfate ou ½ carbonate, sachant qu'il est également possible que deux ou plus des espèces d'anions soient présentes conjointement, et le paramètre y est ≤ 6 et un copolymère CP comprenant i) au moins un macromonomère de polyéther de formule générale (I) sous forme copolymérisée

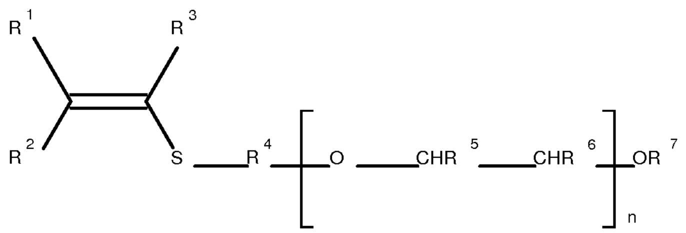

(I)

où

chacun des radicaux $R^1$, $R^2$ et $R^3$ est indépendamment identique ou différent des autres et représente H ou $CH_3$,
$R^4$ représente un groupement alkylène en $C_1$-$C_{30}$ linéaire ou ramifié,
chacun des radicaux $R^5$ et $R^6$ est indépendamment identique ou différent de l'autre et représente H ou un groupement alkyle en $C_1$-$C_{20}$, cycloalkyle en $C_3$-$C_{15}$, aryle, $-CH_2$-O- (alkyle en $C_1$-$C_{20}$), $CH_2$-O- (alcényle en $C_2$-$C_{20}$),
et $R^5$ and $R^6$ peuvent également former conjointement un groupement alkylène en $C_3$-$C_6$,
$R^7$ est indépendamment dans chaque occurrence identique ou différent et représente H ou un groupement alkyle en $C_1$-$C_4$ ou

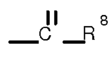

$R^8$ représente un groupement alkyle en $C_1$-$C_{22}$ ou alcényle en $C_2$-$C_{22}$, et
n est indépendamment dans chaque occurrence identique ou différent et représente un entier compris entre 2 et 200,

et

ii) au moins un monomère anionique sous forme copolymérisée,

le rapport massique du copolymère CP sur le calcium dans la composition étant compris entre 1/20 et 20/1.

**2.** Composition selon la Revendication 1, le rapport molaire du calcium sur le silicium dans la composition étant compris entre 0,1 et 40.

**3.** Composition selon la Revendication 1 ou 2, le rapport molaire de l'aluminium sur le calcium dans la composition étant compris entre 0 et 1 et le rapport molaire du sulfate sur le calcium dans la composition étant compris entre 0 et 1.

**4.** Composition selon la Revendication 3, le rapport molaire du sulfate sur le calcium dans la composition étant compris entre 0 et 0,25.

**5.** Composition selon la Revendication 1, qui ne contient pas de silicium ni de silicate de calcium hydraté (C-S-H), et le rapport molaire de l'aluminium sur le calcium dans la composition étant compris entre 0,01 et 2.

**6.** Composition selon l'une quelconque des Revendications 1 à 5, la composition étant une suspension contenant de l'eau et contenant 0,05 à 5 mol de calcium par kg de la suspension.

**7.** Composition selon l'une quelconque des Revendications 1 à 5, la composition étant une poudre et contenant 0,25 à 8 mol de calcium par kg de la poudre.

**8.** Composition selon l'une quelconque des Revendications 1 à 5, le macromonomère de polyéther répondant à la formule générale (Ia)

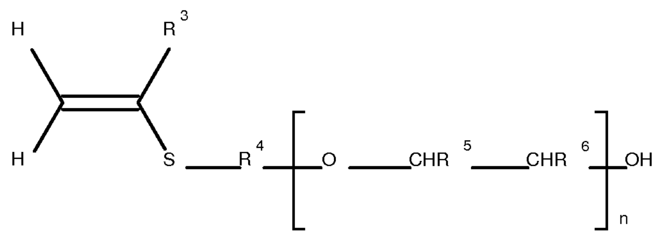

(Ia)

et

$R^3$ représentant H ou un groupement méthyle, préférentiellement H,
$R^4$ représentant un groupement alkylène en $C_2$-$C_{10}$ linéaire ou ramifié, préférentiellement un groupement alkylène en $C_2$,
chacun des radicaux $R^5$ et $R^6$ étant indépendamment identique ou différent de l'autre et représentant H ou un groupement méthyle ou éthyle, préférentiellement H, et
n étant indépendamment dans chaque occurrence identique ou différent et représentant un entier compris entre 20 et 200.

**9.** Composition selon l'une quelconque des Revendications 1 à 8, n dans les formules (I) ou (Ia) représentant un entier compris entre 60 et 150, préférentiellement entre 100 et 150.

**10.** Composition selon l'une quelconque des Revendications 1 à 9, le monomère anionique comprenant au moins un groupement carboxylate, phosphate, phosphonate ou sulfonate, et où il est possible qu'un ou plusieurs des groupements susmentionnés soient présents.

**11.** Composition selon l'une quelconque des Revendications 1 à 10, le monomère anionique comprenant au moins un

groupement carboxylate ou phosphate.

**12.** Composition selon la Revendication 10 ou 11, le monomère anionique comprenant au moins un groupement carboxylate et étant choisi dans le groupe constitué par les groupements acrylate, méthacrylate, crotonate, maléate, fumarate, itaconate, mésaconate, citraconate ou méthylènemalonate, sachant qu'il est possible qu'une multitude des monomères susmentionnés soit présente dans le copolymère.

**13.** Composition selon la Revendication 10 ou 11, le monomère anionique comprenant au moins un groupement phosphate et étant choisi dans le groupe constitué par les sels d'esters phosphoriques d'acide hydroxyéthyl(méth)acrylique (phosphate d'HE(M)A), les sels d'esters phosphoriques d'acide hydroxypropyl(méth)acrylique (phosphate de HP(M)A) ou les sels d'esters phosphoriques d'acide hydroxybutyl(méth)acrylique (phosphate de HB(M)A), sachant qu'il est possible dans chaque cas qu'une multitude des monomères susmentionnés soient présents dans le copolymère.

**14.** Composition selon l'une quelconque des Revendications 1 à 13, le rapport molaire des macromonomères de polyéther de formule générale (I) ou de formule générale (Ia) sur les monomères anioniques étant compris entre 1/1 et 1/10, préférentiellement entre 1/2 et 1/7, plus préférentiellement entre 1/4 et 1/6.

**15.** Procédé de production des compositions selon l'une quelconque des Revendications 1 à 14, **caractérisé en ce qu'**une solution aqueuse d'un sel de calcium réagit en présence d'un copolymère CP dans le cas a) avec un sel de silicate, dans le cas b) avec un sel d'aluminium et éventuellement un sel de sulfate, ou dans le cas c) avec un sel de silicate, un sel d'aluminium et éventuellement un sel de sulfate, ce qui est éventuellement suivi d'une étape de séchage.

**16.** Utilisation des compositions selon l'une quelconque des Revendications 1 à 14 pour l'accélération du durcissement des mélanges chimiques de construction comprenant les suivants : ciment, scories, préférentiellement scories granulées de haut-fourneau, cendres volantes, silice finement broyée, métakaolin, pouzzolanes naturelles, schistes pétrolifères calcinés, ciments de sulfoaluminate de calcium et/ou ciments d'aluminate de calcium, préférentiellement dans les mélanges chimiques de construction comprenant principalement du ciment en tant qu'agent de liaison hydraulique.

**17.** Mélanges de matériaux de construction comprenant des compositions selon l'une quelconque des Revendications 1 à 14, ainsi que ciment, scories, préférentiellement scories granulées de haut-fourneau, cendres volantes, silice finement broyée, métakaolin, pouzzolanes naturelles, schistes pétrolifères calcinés, ciments de sulfoaluminate de calcium et/ou ciments d'aluminate de calcium.

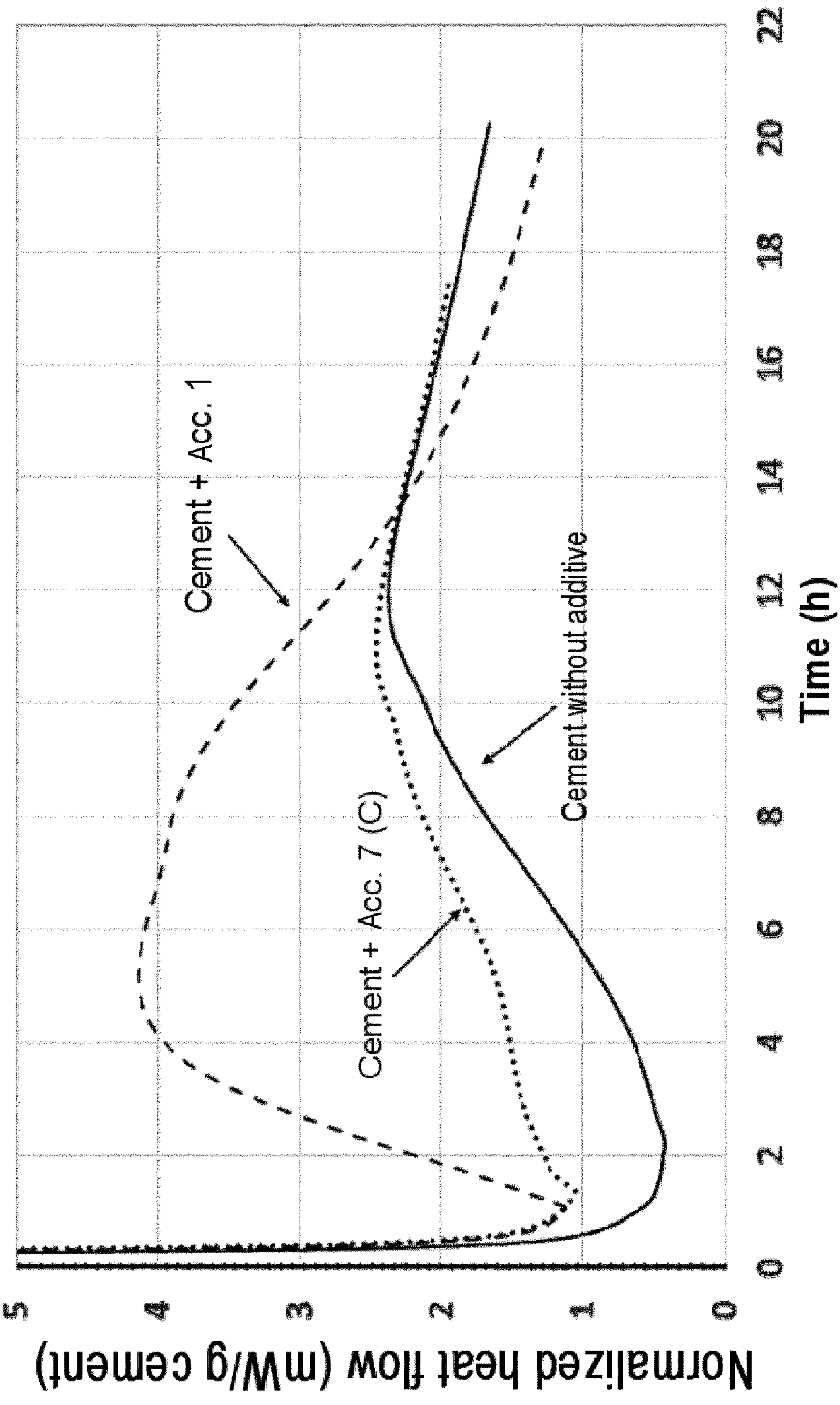


Figure 1: Heat flow curves of cement prepared by mixing with water without additive (continuous black line) and also in the presence of inventive Acc. 1 (dashed line) and as comparative Acc. 7(C) (dotted line).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6777517 B1
- WO 2015063194 A1
- WO 02070425 A
- WO 2010026155 A1
- WO 2014114784 A1
- DE 4325237 A1
- DE 10243361 A1
- WO 2009100956 A2


### Non-patent literature cited in the description


- **H.F.W. TAYLOR.** Cement Chemistry. Thomas Telford Services Ltd, 1997, 157-170
- **H.F.W. TAYLOR.** The Cement Chemistry. 1997